# EUROPEAN PATENT APPLICATION

(11) **EP 3 971 802 A1**
(43) Date of publication of application: **23.03.2022**
(21) Application number: 20834259.2
(22) Date of filing: 22.06.2020
(51) Int. Cl.: G06Q 10/00, G06Q 50/04

(54) **SUPPLY CHAIN MANAGEMENT METHOD, SUPPLY CHAIN MANAGEMENT PROGRAM, SUPPLY CHAIN MANAGEMENT SYSTEM, AND TRANSACTION RECORD DISPLAY PROGRAM**

(30) Priority: 02.07.2019 JP 2019123836
(71) Applicant: DENSO CORPORATION, Kariya-city, Aichi-pref., 448-8661 (JP)
(72) Inventor: OKABE, Tatsuya, Kariya-city, Aichi-pref., 448-8661 (JP); KANEMATSU, Tousei, Kariya-city, Aichi-pref., 448-8661 (JP)
(74) Representative: Winter, Brandl - Partnerschaft mbB
(86) International application number: PCT/JP2020/024289
(87) International publication number: WO 2021/002226

(57) **Abstract**

A data management server (60) is configured to manage a trading record (ReT) between traders (TR) that form a supply chain (SC). The data management server (60) is configured to acquire item data attached to a delivered item (IMi) delivered to a specific entity (TRs) and company data assigned to the specific entity, and calculate a hash value based on the item data and the company data. The hash value is provided to the specific entity (TRs) as the item data to be attached to a shipped item (IMo) shipped from the specific trader (TRs) to another trader (TR).

## Description

### CROSS REFERENCE TO RELATED APPLICATION

The present application is based on and claims the benefit of priority from Japanese Patent Application No. 2019-123836 filed in Japan filed on July 2, 2019, the entire disclosure of the above application is incorporated herein by reference.

### TECHNICAL FIELD

The present disclosure relates to a supply chain management for managing trading records.

### BACKGROUND ART

Patent Literature 1 discloses a management system for processing of goods with a purpose of managing traceability of waste disposal. Specifically, in the management system of the Patent Literature 1, a two-dimensional code or an IC tag recording waste information is distributed as a manifest together with the waste. An identification information is given to each waste disposal company, and a record of processing by the company is saved in a distributed storage system when the manifest is read by the waste disposal company.

### PRIOR ART DOCUMENT

### PATENT DOCUMENT

Patent Document 1: JP2018-169764A

### SUMMARY OF THE INVENTION

In the management system disclosed by Patent Literature 1, the information recorded in the manifest contains predetermined contents such as a waste category, a waste amount, and a processing route. However, in order to eliminate frauds by traders in the supply chain, it may be desirable that contents reflecting the results of trades are attached to the item distributed among the traders instead of the predetermined contents. However, it may be difficult to record, in the two-dimensional code or the IC tag attached to the item, all information about multiple traders which involved in the distribution process.

It is an object to provide a supply chain management method, a supply chain management program, a supply chain management system, and a trading record display program which can appropriately manage a supply chain with less volume of data attached to an item.

In view of the above points, according to an aspect, a supply chain management method is for a computer to manage a trading record between a plurality of traders that form a supply chain, and the supply chain management method includes: acquiring, by at least one processor, item data attached to a delivered item delivered to a specific entity that is one trader of the plurality of traders and a node identification data assigned to the specific entity; calculating, by the at least one processor, a hash value based on the item data and the node identification data; and providing, by the at least one processor, at least the hash value to the specific entity as the item data that is to be attached to a shipped item shipped from the specific entity to another trader of the plurality of traders.

According to another aspect, a supply chain management program is for managing a trading record between a plurality of traders that form a supply chain, and the supply chain management program is configured to cause at least one processor to: acquire item data attached to a delivered item delivered to a specific entity that is one trader of the plurality of traders and a node identification data assigned to the specific entity; calculate a hash value based on the item data and the node identification data; and provide at least the hash value to the specific entity as the item data that is to be attached to a shipped item shipped from the specific entity to another trader of the plurality of traders.

According to another aspect, a supply chain management system is configured to manage a trading record between a plurality of traders that form a supply chain, and the supply chain management system includes: a plurality of user nodes each of which is used by corresponding one of the plurality of traders; and at least one host node configured to communicate with the plurality of user nodes, wherein one user node of the plurality of user nodes used by a specific entity that is one trader of the plurality of traders includes an acquiring unit configured to acquire item data attached to a delivered item delivered to the specific entity and node identification data assigned to the specific entity, and a transmission unit configured to transmit, to the host node, the item data and the node identification data acquired by the acquiring unit, and the host node includes a calculation unit configured to calculate a hash value based on the item data and the node identification data transmitted from the one user node, and a providing unit configured to provide, to the specific entity, at least the hash value as the item data that is to be attached to a shipped item shipped from the specific entity to another one of the plurality of traders.

According to these aspects, the item traded between multiple traders TR is accompanied by the hash value that reflects the results of preceding trades. Accordingly, the trading records of the item traded between the traders are accumulated as the item is distributed in a manner that makes it difficult to tamper the trading records, while keeping the volume of data attached to the item to a minimum. Accordingly, the management of the supply chain can be appropriately performed.

According to another aspect, a supply chain management method is for a computer to manage a trading record between a plurality of traders that form a supply chain using a blockchain, and the supply chain management method includes: acquiring, by at least one processor, item data attached to a delivered item delivered to a specific entity that is one trader of the plurality of traders and a node identification data assigned to the specific entity; accumulating, by the at least one processor, the trading record related to the specific trader in association with the item data; determining, by the at least one processor, to continuously use the item data attached to the delivered item as the item data that is to be attached to a shipped item shipped from the specific entity to another trader of the plurality of traders; acquiring a reference request for the trading record together with the item data; extracting, from the trading records managed using the blockchain, the trading record related to any one of the plurality of traders which used the item data when the item data is continuously used by the plurality of traders; and providing, to a requester that made the reference request, providing data based on the extracted trading record.

According to this aspect, the item data attached to the shipped item is continuously used by multiple traders. In the blockchain, the trading records of multiple traders are accumulated in association with the item data that is continuously used. Accordingly, the trading records of the item traded between the traders are accumulated in the blockchain as the item is distributed in a manner that makes it difficult to tamper the trading records, while keeping the volume of data attached to the item to a minimum. Accordingly, the management of the supply chain can be appropriately performed.

According to another aspect, a trading record display program is for displaying a trading record between a plurality of traders that form a supply chain, and the trading record display program is configured to cause at least one processor to: read item data attached to a specific item; transmit, to a host node, a reference request for the trading record related to the specific item together with the item data; receive, from the host node, providing data related to the trading record that is related to the specific item; and display, based on the providing data, the trading record in a hierarchical manner reflecting a distribution channel of the specific item.

According to this aspect, the trading records related to the specific item can be obtained from the host node by reading the item data attached to the specific item. Accordingly, the user can refer to the preceding trading records with less volume of data attached to the item. Additionally, since the trading records are displayed in a hierarchical manner reflecting the distribution process of the specific item, the user can easily understand the trading records. According to this, since the convenience in the reference of the records can be improved, and the supply chain can be easily managed appropriately.

### BRIEF DESCRIPTION OF THE DRAWINGS

FIG. 1 is a diagram illustrating a supply chain management system according to a first embodiment of the present disclosure.
FIG. 2 is a block diagram illustrating an electrical configuration between a user device, a timestamp server, a data management server, and a user terminal.
FIG. 3 is a diagram illustrating an example of a two-dimensional code that records item data and the like and is attached to an item distributed among traders.
FIG. 4 is a flowchart illustrating a response output process performed by a response output unit of the timestamp server.
FIG. 5 is a flowchart illustrating a data anomaly detection process performed by a record verification unit of the data management server.
FIG. 6 is a diagram schematically illustrating a process in which hash values are connected together as a Merkle tree as items are distributed.
FIG. 7 is a sequence diagram illustrating a chain generation process performed by the supply chain management system.
FIG. 8 is a sequence diagram illustrating a record reference process performed by cooperation of the data management server and the user terminal.
FIG. 9 is a diagram illustrating screen transitions of a GUI screen displayed on the user terminal by a traceability checker application.
FIG. 10 is a diagram illustrating an example where the supply chain management system shown in FIG. 1 is applied to a supply chain for breads.
FIG. 11 is a sequence diagram illustrating an initial setting process for registering initial setting data and issuing a basic information code.
FIG. 12 is a diagram illustrating an example where the chain generation process shown in FIG. 7 is applied to the supply chain shown in FIG. 10.
FIG. 13 is a sequence diagram illustrating a chain generation process according to a second embodiment.
FIG. 14 is a sequence diagram illustrating a record reference process according to the second embodiment.

### EMBODIMENTS FOR EXPLOITATION OF THE INVENTION

Hereinafter, embodiments of the present disclosure will be described with reference to the drawings. In the following respective embodiments, corresponding structural elements are indicated by the same reference signs and may not be redundantly described in some cases. When only a part of the configuration is described in each embodiment, the configuration of the other embodiments described above can be applied to other parts of the configuration. Besides the explicitly described combinations of structural components in each of the following embodiments, the structural components of different embodiments may be partially combined even though such a combination is not explicitly explained as long as there is no problem. Moreover, combinations of configurations mentioned in embodiments and modifications which are not disclosed are assumed to be disclosed by following description.

### (First Embodiment)

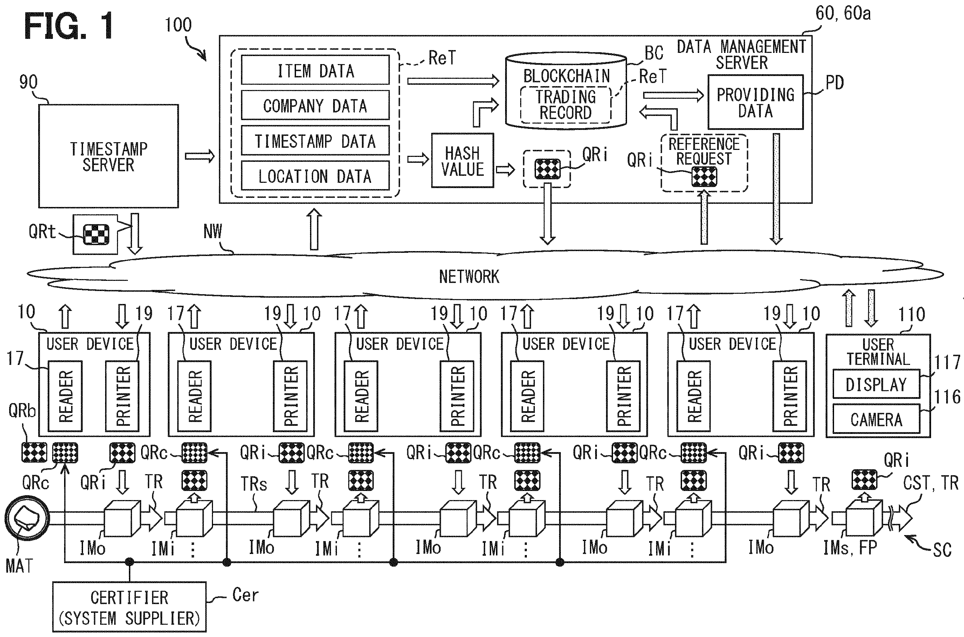

A supply chain management system 100 according to a first embodiment of the present disclosure shown in FIG. 1 is configured to manage a trading record ReT of an item traded between traders TR in a supply chain SC including multiple traders TR. In the supply chain management system 100, techniques of a blockchain BC are used to manage the trading record ReT for protecting the trading record ReT from tampering.

The supply chain SC is a connection between the traders TR for delivering, for example, industrial products, agricultural products, and marine products to consumers CST. For example, in the supply chain SC for delivering the industrial products to the consumers CST, the traders TR include material mining companies, material producing companies, processing companies, transport companies, and distribution companies. In this case, the supply chain SC from a raw material MAT to a final product FP is set up. In addition, in the present disclosure, the trader TR may include the consumer CST of the final product FP and the disposal processing companies involved in the disposal of the final product FP.

Each vendor included in the traders TR except the consumers CST is certified by a certifier (certification body) Cer in advance. The certifier Cer is, for example, a manager in charge of the management of the supply chain SC and also a supplier who supplies the final product FP to the consumer CST. The certifier Cer accredits the vendors who meet the prescribed criteria for participating in the supply chain SC by issuing a certificate to the certified vendor. As described later, the certifier Cer may be a company corresponding to a system supplier or a platformer of the supply chain management system 100.

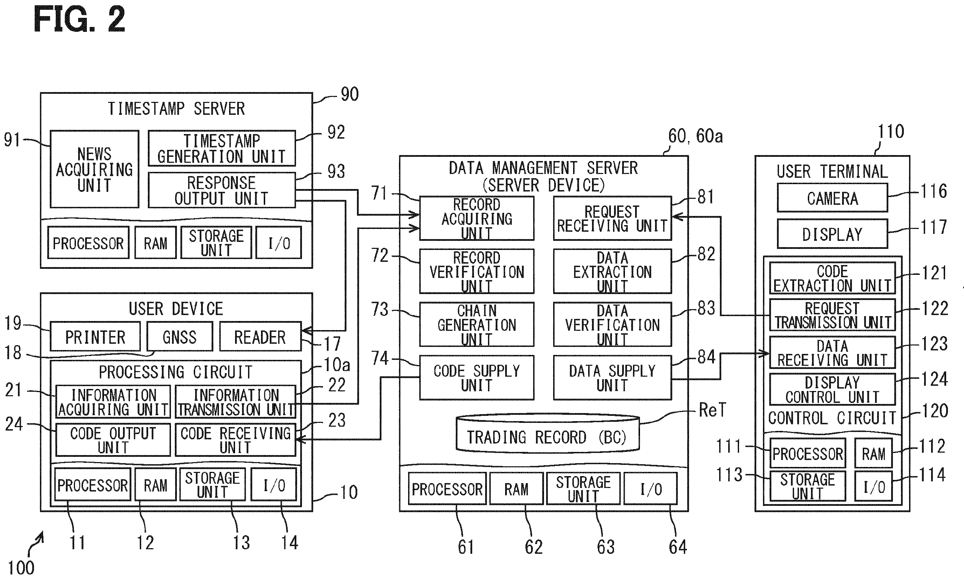

The supply chain management system 100 includes multiple user devices 10, a timestamp server 90, and at least one data management server 60, as shown in FIGS. 1, 2. Each user device 10, the timestamp server 90, and the data management server 60 are connected with the network NW to communicate with each other.

At least one user device 10 is provided in the facility of each trader TR that produces or disposes of the final products FP. The user device 10 is used in the facility of a specific trader TR (hereinafter, referred to as a specific vendor TRs) in which the user device 10 is provided by a worker of the specific vendor TRs. The user device 10 is configured to transmit, to the data management server 60, a delivery record of the item (hereinafter, referred to as a delivered item IMi) delivered to the specific vendor TRs. In addition, the user device 10 is configured to receive, from the data management server 60, information to be attached to the item (hereinafter, referred to as a shipped item IMo) shipped from the specific vendor TRs. The user device 10 includes a reader 17, a GNSS (Global Navigation Satellite System) receiver 18, a printer 19, and a processing circuit 10a.

The reader 17 is configured to read the item data, the company data, the timestamp data, and the like. Each data is recorded in a two-dimensional code such as QR code (registered trademark). The reader 17 includes an area sensor in which CCD elements are arranged two-dimensionally. The reader 17 is configured to scan the two-dimensional code printed on a paper medium or the like and output the scanned information of the two-dimensional code to the processing circuit 10a.

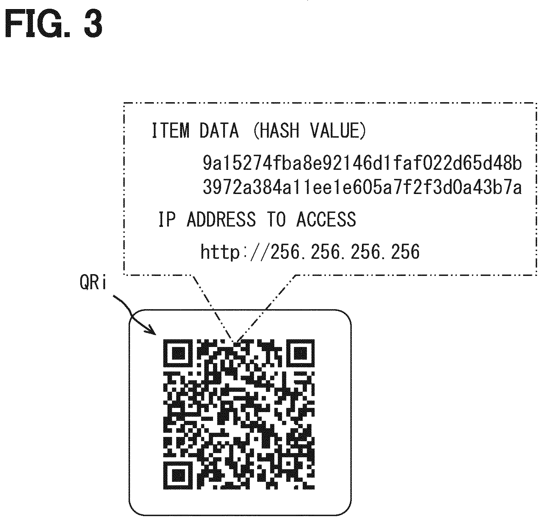

The item data is data attached to the delivered item IMi. The two-dimensional code (hereinafter, referred to as an item code QRi) recording the item data is printed on the paper medium and attached to the delivered item IMi as a label. The position to which the item code QRi is attached is not limited to the product itself, and may be any of packaging, certificates, or the like. In the item code QRi, at least a hash value that is the item data associated with the delivered item IMi, and an IP address of an inquiry destination of the trading record ReT (see FIG. 3). As described later, the hash value is a value (Merkle root) that reflects the distribution channel of the delivered item IMi.

In the item code QRi, a URL for inquiring the trading record ReT may be recorded instead of the above-mentioned IP address. Note that IP addresses have the advantage that the data volume (number of bits) does not fluctuate compared to URLs. Further, information of the inquiry destination for the trading record ReT is provided for traceability to each trader TR in advance by another means, the IP address and the URL may not be recorded in the item code QRi.

The company data is identification data indicating the specific vendor TRs. Unique company data is given to each trader TR by the certifier Cer. The two-dimensional code (hereinafter, referred to as company code QRc) recording the company data is printed on a paper medium or the like and provided in advance to each trader TR. In the company code QRc, the hash value that is associated with each trader TR in advance by the certified Cer is recorded as the company data. The certifier Cer has, as authentication data, information containing a name (company name, representative name, and the like), an address, a business establishment name, career, and the like of the trader TR. The company data may be the hash value based on such authentication data.

The generation of the company code and the distribution of the company code QRc may be carried out by the system supplier of the supply chain management system 100 instead of the manager of the supply chain SC who performs the authentication. In this case, the system supplier is also considered to be a part of the certifier Cer. Multiple company codes QRc may be provided to one vendor. For example, the company code QRc may be provided to each of factories owned by one vendor. Further, different company codes QRc may be provided for lines through which a specific product is manufactured. In this case, the company data recorded in the company code QRc is information identifying not only the vendor but the factory and the line.

As the item code QRi and the company code QRc, a secure QR code (SQRC, registered trademark) configured to selectively disclose the recorded information by using the private key may be preferable. The data recorded in the SQRC is encrypted with the public key, and only the user device 10 that has the private key can read the data. As a result, only the traders TR in the supply chain SC can read the item data and the company data. Further, as the item code QRi and the company code QRc, anti-copy QR code which is difficult to be copied by a copier or the like by using a special ink may be preferable.

The timestamp data is used as data associated with the date and time when the delivered item IMi was at the specific vendor TRs. The timestamp data is created by the timestamp server 90. A two-dimensional code (hereinafter, referred to as timestamp code QRt) in which the hash value is recorded as the timestamp data is provided to each trader TR as image data, for example.

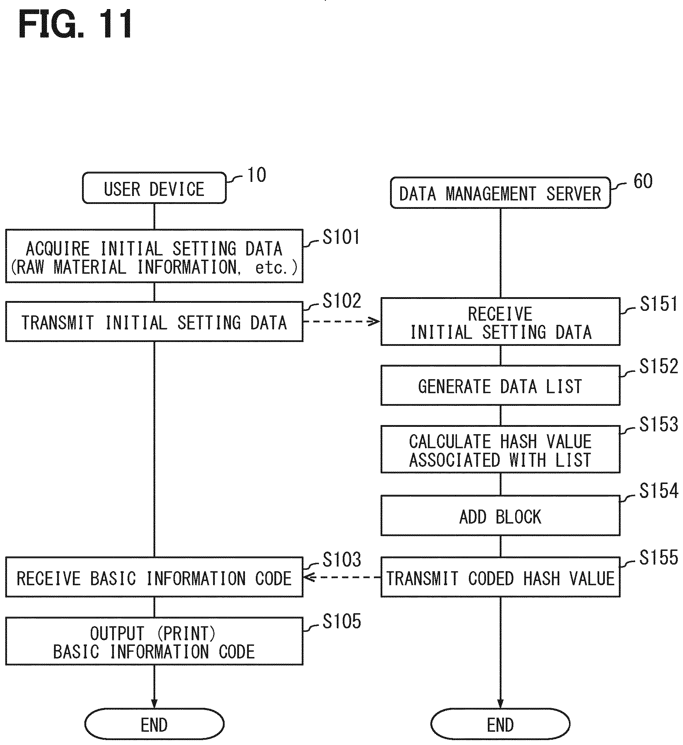

The reader 17 is further configured to read the initial setting data. The initial setting data is recorded in a two-dimensional code such as QR code like other data. The initial setting data is data that complements the item data and the company data. Some contents of the initial setting data may overlap with the item data and the company data. The initial setting data is mainly registered in advance in the data management server 60 by the trader TR who supplies the raw material MAT to the supply chain SC (see FIG. 11). For example, information such as the production place and the production equipment of the raw material MAT may be registered as the initial setting data. The data management server 60 is configured to issue a two-dimensional code (hereinafter, a basic information code QRb) in which the initial setting data is recorded. The basic information code QRb is provided as, for example, image data to the trader TR who registered the initial setting data. The basic information code QRb is printed on a paper medium or the like, and is scanned by the reader 17 together with the item code QRi and the company code QRc.

The GNSS receiver 18 is configured to receive positioning signals transmitted from multiple satellites (positioning satellites) to identify the location where the user device 10 is being used. The location data identified by the GNSS receiver 18 is historical data indicating the location where the delivered item IMi was located. The GNSS receiver 18 is configured to provided the location data based on the positioning signals to the processing circuit 10a.

The printer 19 is an output device configured to print, on a paper medium (sticker or the like), new item code QRi acquired from the data management server 60. The item code QRi printed out by the printer 19 is attached to the shipped item IMo to be distributed to the trader TR in the next step.

The processing circuit 10a mainly includes a microcontroller equipped with a processor 11, RAM 12, a storage unit 13, an input/output interface 14, and a bus connecting these elements each other. The processing circuit 10a serves as a computer of the user device 10. The processor 11 of the processing circuit 10a is configured to access to the RAM 12 to have multiple functional units related to the accumulation of the trading records ReT. Specifically, the processing circuit 10a includes an information acquiring unit 21, an information transmission unit 22, a code receiving unit 23, and a code output unit 24.

The information acquiring unit 21 is configured to extract, from the image data of the code read by the reader 17, hash values which are the item data, the company data, and the timestamp data. The information acquiring unit 21 is configured to acquire the location data from the GNSS receiver 18. The information transmission unit 22 is configured to transmit the data acquired by the information acquiring unit 21 to the data management server 60 through the network NW.

The code receiving unit 23 is configured to receive, through the network NW, the image data which is created by the data management server 60 based on the transmitted data from the information transmission unit 22. The code output unit 24 is configured to cause the printer 19 to output the item code QRi received by the code receiving unit 23.

The timestamp server 90 is a server device configured to generate timestamp data. In response to a providing request from the other nodes such as the user device 10 and the data management server 60 to provide information related to the timestamp data, the timestamp server 90 provides the timestamp data to the node which made the providing request.

The timestamp server 90 mainly includes a computer equipped with a processor, RAM, a storage unit, an input/output interface, a bus connecting these elements each other, and the like. The processor is hardware coupled with the RAM for arithmetic processing. The processor is configured to execute processes related to generation and distribution of the timestamp data by accessing the RAM. The timestamp server 90 has a news acquiring unit 91, a timestamp generation unit 92, and a response output unit 93 based on timestamp generation programs stored in the storage unit.

The news acquiring unit 91 is configured to acquire news articles distributed with information indicating the date and time from a news distribution server connected with the network NW. The news acquiring unit 91 is configured to acquire the news articles, for example, every day or every predetermined time. For example, the news acquiring unit 91 acquires the news articles such as "The first year of Reiwa started (May 1, 2019)", "176 tuna, first competition in Reiwa (May 2, 2019)", "New Zealand prime minister gets engagement (May 3, 2019)".

The timestamp generation unit 92 is configured to generate the timestamp data based on the news articles acquired by the news acquiring unit 91. The timestamp generation unit 92 is configured to generate input information in which the date information (e.g. 20190501), a character string of the news article, and a character string specified in advance are combined in this order. The timestamp generation unit 92 is configured to calculate, as the timestamp data, the hash value having a predetermined number of bits (for example, 256 bits) by inputting the above-described input information containing the news article into a hash function such as SHA-256. The timestamp generation unit 92 is configured to store the calculated hash value, the date information, the news article, and the predetermined character string to a timestamp list as a set of data for search.

The hash function used in the supply chain management system 100 is a cryptographic hash function and has characteristics as follows: the cryptographic hash function does not output the same hash value in response to different inputs thereto; and the input cannot substantially be estimated from the output hash value. For example, instead of the SHA-256, another encryption algorithms such as SHA-1, SHA-2, and SHA-3 may be appropriately used according to the required output length (number of bits).

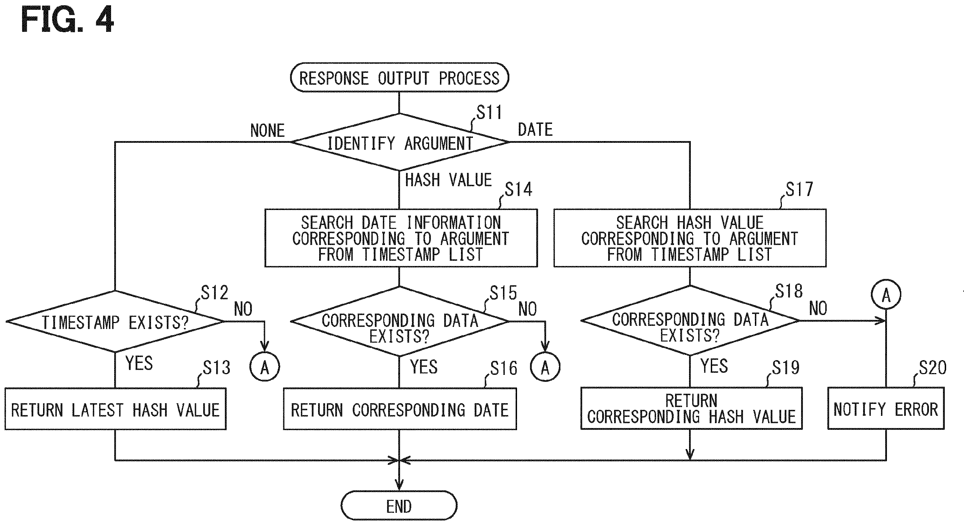

The response output unit 93 is configured to acquire the providing request from the other nodes such as the user device 10 and the data management server 60 which requests to provide information related to the timestamp data through the network NW. The response output unit 93 is configured to perform a response output process (see FIG. 4) in response to the providing request acquired. In the response output process, the response output unit 93 determines whether the response output unit 93 received an argument together with the providing request, and identifies contents of the argument (see step S11). When the response output unit 93 did not receive the argument, the response output unit 93 determines whether the latest timestamp data exists (see step S12). When the latest timestamp data exists, the response output unit 93 returns the image data of the timestamp code QRt in which the hash value of the latest timestamp data is recorded to the node that made the request (see step S13). In contrast, when the timestamp data does not exist, the response output unit 93 returns a value (for example, 0) indicating an error (see step S20).

When the response output unit 93 received a hash value as the argument, the response output unit 93 searches the date information corresponding to the hash value from the timestamp list (see step S14). When the corresponding date information is found (S15: YES), the response output unit 93 returns the corresponding date to the node that made the request (see step S16). In contrast, when the corresponding date information is not found (S15: NO), the response output unit 93 notifies a value indicating an error (see step S20).

When the response output unit 93 received a date as the argument, the response output unit 93 searches the hash value corresponding to the date from the timestamp list (see step S17). When the corresponding hash value is found (S18: YES), the response output unit 93 returns the corresponding hash value to the node that made the request (see step S19). In contrast, when the corresponding hash value is not found (S18: NO), the response output unit 93 notifies a value indicating an error (see step S20).

The data management server 60 is a host node configured to communicate with multiple user devices 10. The data management server 60 is configured to accumulate the trading records ReT, and performs a data mining for the accumulated trading records ReT. The data management server 60 has a server device 60a mainly including a computer equipped with a processor 61, RAM 62, a storage unit 63, an input/output interface 64, a bus connecting these elements each other, and the like. The processor 61 is hardware coupled with the RAM 62 for arithmetic processing. The processor 61 is configured to access the RAM 62 to perform processes related to data management. The storage unit 63 stores supply chain management programs for the data management.

The data management server 60 has a record reference function to provide the trading record ReT such that the trading record ReT can be referred to, in addition to a record generation function to accumulate the trading records ReT provided from multiple user devices 10. Hereinafter, the record generation function will be described in detail. The storage unit 63 stores, as one of the supply chain management programs, a record generation program for accumulating the trading records ReT. The data management server 60 has functional units such as a record acquiring unit 71, a record verification unit 72, a chain generation unit 73, and a code supply unit 74 based on the record generation program.

The record acquiring unit 71 is configured to acquire, as the trading record ReT, information transmitted from the user device 10 through the network NW. The trading record ReT contains at least one item data, the company data, the timestamp data, and the location data. The item data, the company data, and the timestamp data are hash values having a predetermined number of bits. The record acquiring unit 71 is configured to obtain a hash value of the location data by inputting the location data into a hash function such as SHA-256.

The record acquiring unit 71 is configured to transmit the providing request with the hash value of the timestamp data as an argument to the timestamp server 90. As a result, the record acquiring unit 71 receives the date information corresponding to the transmitted hash value from the timestamp server 90. The transmission of the timestamp data from the user device 10 to the record acquiring unit 71 may be omitted. In this case, the record acquiring unit 71 obtains the hash value as the timestamp data in association with the date information of the current day upon acquiring the item data or the like from the user device 10.

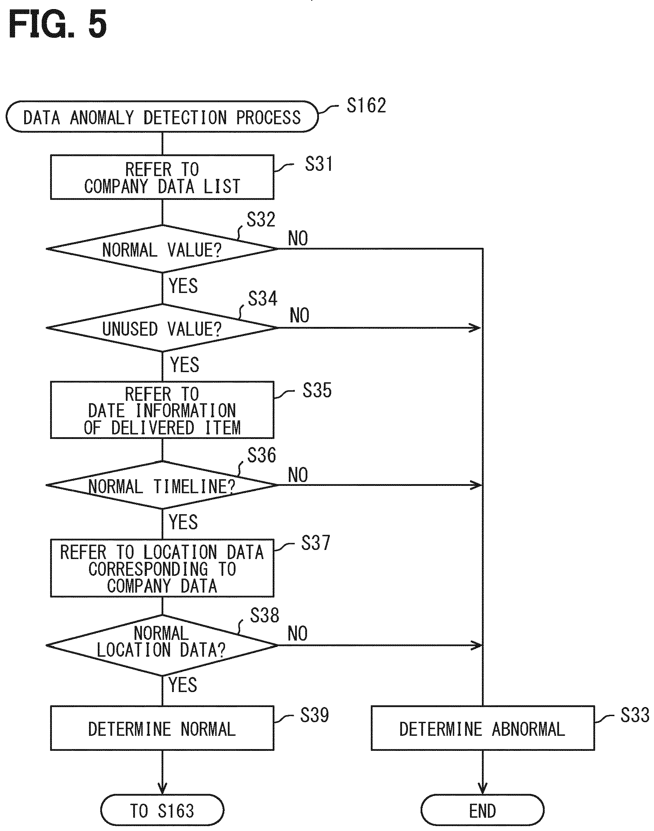

The record verification unit 72 performs a data anomaly detection process (see FIG. 5) to determine whether each data acquired by the record acquiring unit 71 is normal by comparing the acquired data with data registered in advance. The record verification unit 72 is configured to detect improper products, parts, raw materials MAT, and the like, which would be introduced by non-certified vendors into distributed items in the supply chain SC.

Specifically, the record verification unit 72 is configured to refer to a list of the company data set for each trader TR (see step S31), and determine whether the company data acquired by the record acquiring unit 71 is identical with a normal value registered in the list of the company data (see step S32). When the hash value of the company data is different from the hash value in the list, the record verification unit 72 determines that improper items may be introduced, which is abnormal (see step S33).

The record verification unit 72 is configured to determine whether the item data acquired by the record acquiring unit 71 this time overlaps with another item data which was already acquired from another trader TR (see S34). In detail, when new shipped item IMo appears, the new shipped item IMo is recorded in the trading record ReT as an unused item in the process described later (S164). When the delivered item IMi delivered this time is an unused item, the record verification unit 72 changes a status of the delivered item IMi into a used states. In contrast, when the delivered item IMi delivered this time is a used item, it may mean that the number of existing items is larger than that of produced items, and accordingly the record verification unit 72 determines that an anomaly is occurring.

The record verification unit 72 is configured to refer to past timestamp data associated with the item data (see step S35), that is, the timestamp data which was recorded by the trader TR in one of preceding steps. The record verification unit 72 is configured to determine whether the chronological order of the date information associated with the past timestamp data is normal (see step S36). When the chronological order is not correct, the record verification unit 72 determines that an anomaly is occurring.

The record verification unit 72 is configured to refer to a list of the location data of the specific vendor TRs corresponding to the company data (see step S37), and determine whether the acquired location data is consistent with the registered location data of the specific vendor TRs (see step S38). For example, when the acquired location data is completely different from the registered location data of the specific vendor TRs, the record verification unit 72 determines that an anomaly is occurring. In contrast, when an anomaly is not detected from each data, the record verification unit 72 determines that the delivered item IMi is a legitimate item (see step S39).

The chain generation unit 73 is configured to accumulate the item data, the company data, the timestamp data, and the location data acquired by the record acquiring unit 71 in a tamper-proof state using a blockchain technology. The chain generation unit 73 is configured to calculate a hash value as new item data which is to be attached to the shipped item IMo of the specific vendor TRs. The chain generation unit 73 is configured to prepare hash values of: the item data of all delivered items IMi related to the shipped item IMo; the company data of the specific vendor TRs; the timestamp data of the specific vendor TRs; and the location data of the specific vendor TRs. The chain generation unit 73 is configured to calculate the Merkle root of these hash values.

The chain generation unit 73 is configured to add a block, which contains the data (hash values) acquired as the trading record ReT, to the blockchain BC. In addition, the chain generation unit 73 is configured to set the hash value of the last block as new item data. Through the above processes, the chain generation unit 73 repeats the calculation of the hash value reflecting the distribution channel up to that point as the transaction of the item between each trader TR in the supply chain SC progresses. The chain generation unit 73 is configured to store the blockchain containing the trading records ReT to the storage space in the storage unit 63.

The code supply unit 74 is configured to provide the hash value of the last block calculated by the chain generation unit 73 to the user device 10 which transmitted the trading record ReT. The code supply unit 74 is configured to generate a two-dimensional code, as new item code QRi, containing at least the hash value. The code supply unit 74 is configured to transmit the image data of the item code QRi to the user device 10. The item code QRi is output on a paper medium by the user device 10, and attached to the shipped item IMo which is to be shipped by the specific vendor TRs to another trader TR in the subsequent step.

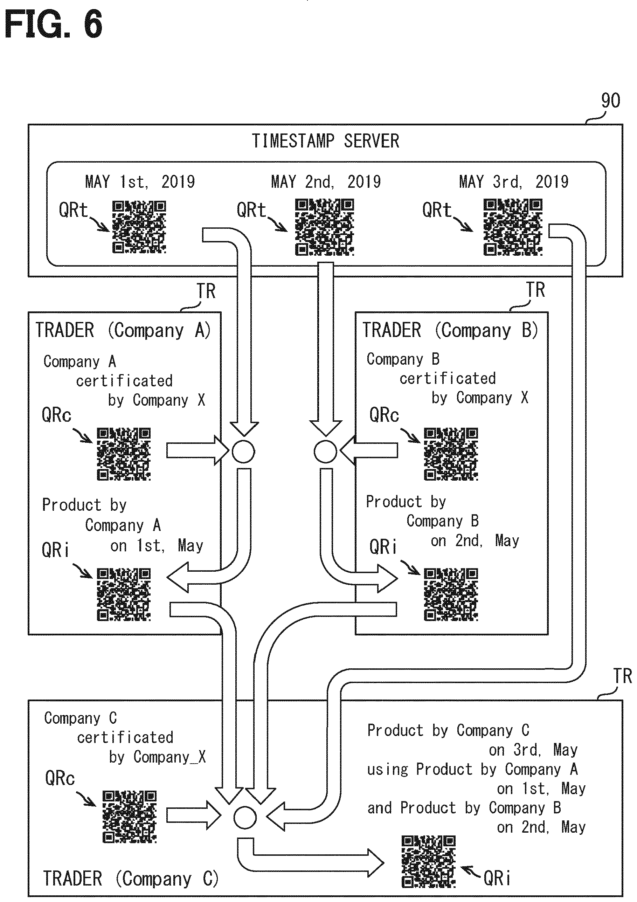

The generation process of the blockchain BC by the record generation function will be described based on FIG. 6. In the specific example shown in FIG. 6, the shipped items IMo shipped from the company A and the company B are delivered as the delivered items IMi to the company C. Subsequently, the shipped item IMo produced from the delivered items IMi in the company C is shipped to next trader TR. In this example, the company A and the company B are material suppliers, for example, and companies that are the starting points of the supply chain SC. The company C is a parts supplier, for example, and a company in the middle of the supply chain SC.

In each of the company A and the company B, the timestamp code QRt prepared by the timestamp server 90 and the company code QRc distributed by the certifier Cer are scanned. Each hash value recorded in the codes QRt, QRc are transmitted from the user devices 10 at the companies A, B to the data management server 60. These hash values are incorporated into the blockchain BC as the trading record ReT by the chain generation unit 73. Further, the hash value of the last block is recorded in the item code QRi and transmitted to the companies A, B. The item code QRi is printed on a paper medium and attached to the shipped item IMo.

In the company C, the item codes QRi attached to the delivered items IMi delivered from the companies A, B are scanned in addition to the timestamp codes QRt, and the company codes QRc. The hash values recorded in the codes QRt, QRc, QRi are transmitted to the data management server 60 and incorporated into the blockchain BC by the chain generation unit 73. Since the shipped items IMo are delivered from multiple traders TR to one trader TR, the blockchain BC has a tree structure instead of a linear structure. In this case also, the hash value of the last block is recorded in the item code QRi and transmitted to the company C. The item code QRi is printed on a paper medium and attached to the shipped item IMo that is to be shipped to the next trader TR.

The hash value recorded in each of the company codes is a character string obtained by converting the content of "Company A (or B, C) certificated by Company X" into a hash value, for example. "Company X" is the name of the certifier Cer. The hash value of the item code QRi obtained by the companies A, B is a character string that makes it possible to refer to the content of "Product by Company A on 1st, May", for example. Similarly, the hash value of the item code QRi obtained by the company C is a character string that makes it possible to refer to "Product by Company C on 3rd, May using Product by Company A on 1st, May and Product by Company B on 2nd, May", for example.

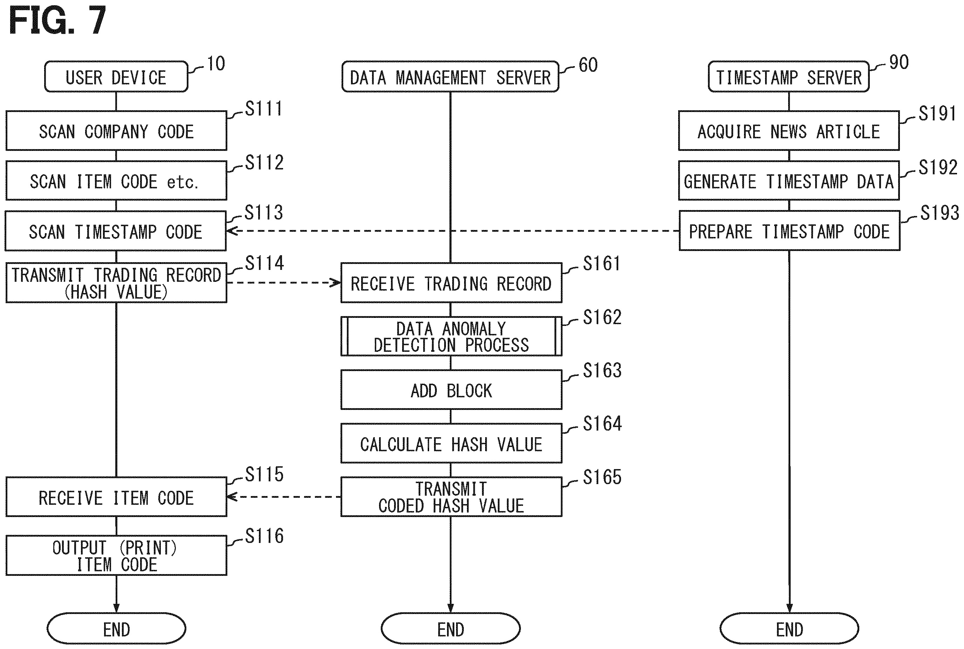

Next, the chain generation process performed by the cooperation of the configurations described above will be further described based on the sequence diagram shown in FIG. 7 with reference to FIGS. 1, 2.

In step S191 performed by the timestamp server 90, the news information is searched and the news article is acquired, and the process proceeds to step S192. In step S192, the hash value used as the timestamp data is generated based on the news article acquired in step S191, and the process proceeds to step S193. In step S193, the timestamp code QRt in which at least the hash value calculated in step S192 is recorded is generated to be provided to the user device 10 or the like.

In step S111 performed by the user device 10, the company code QRc is scanned, and the process proceeds to step S112. In step S112, the item code QRi is scanned, and the process proceeds to step S113. When multiple delivered items IMi are delivered, the item codes QRi of all delivered items IMi are scanned. When the basic information code QRb is prepared in advance, the basic information code QRb is also scanned in step S112.

In step S113, providing the timestamp code QRt prepared in step S193 is requested, the timestamp code QRt is displayed on the screen, and the timestamp code QRt is scanned. Subsequently, the process proceeds to step S114. The order of steps S111-S113 may be changed as appropriate.

In step S114, the hash values of the codes scanned in steps S111-S113 and latest location data are transmitted to the data management server 60 as the current trading record ReT, and the process proceeds to step S115.

In step S161 performed by the data management server 60, the trading record ReT transmitted by the user device 10 in step S114 is received, and the process proceeds to step S162. In step S162, the data anomaly detection process (see FIG. 5) is performed to confirm that the data related to the current delivered item IMi contains no anomaly, and the process proceeds to step S163. When it is determined in the data anomaly detection process that an anomaly is occurring, a value indicating an error is transmitted to the user device 10, and the process ends.

In step S163, the block based on the trading record ReT acquired in step S161 is added to the blockchain BC, and the process proceeds to step S164. In step S164, the hash value of the last block is calculated, and the process proceeds to step S165. In step S164, the shipped item IMo to which the calculated hash value is attached is recorded as an unused item. As a result, the current shipped item IMo is registered as UTXO (Unspent Transaction Output) in the blockchain BC.

In step S165, the hash value calculated in step S164 is recorded in the item code QRi. Subsequently, the generated item code QRi is transmitted to the user device 10 which transmitted the trading record ReT, and the processes ends.

In step S115 performed by the user device 10, the item code QRi transmitted from the data management server 60 in step S165 is received, and the process proceeds to step S116. In step S116, the item code QRi received in step S115 is output, and the process ends.

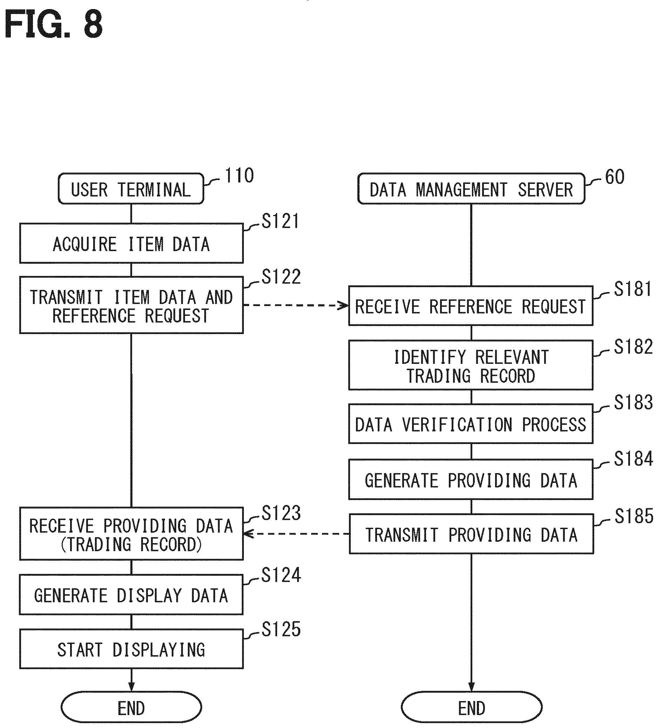

Next, the record reference function of the data management server 60 will be described with reference to FIGS. 1, 2, 8, 9. In the storage unit 63 of the data management server 60, a record reference program is stored as one of the supply chain management programs. Through the processes based on the record reference program, the data management server 60 generates a providing data PD that is to be transmitted to the user terminal 110 in response to a reference request from the user terminal 110. The data management server 60 is configured to perform the record reference process (see FIG. 8) in cooperation with the user terminal 110 connected with the network NW. Functions of the data management server 60 and the user terminal 110 related to the record reference process will be described below.

The data management server 60 has functional units such as a request receiving unit 81, a data extraction unit 82, a data verification unit 83, and a data supply unit 84 based on the execution of the record reference program by the processor 61.

The request receiving unit 81 is configured to acquire the reference request transmitted from a request transmission unit 122 and the item data of a specific item IMs (see step S181). The data extraction unit 82 is configured to refer to the blockchain BC to identify the trading records ReT related to the item data acquired by the request receiving unit 81 (see step S182). The data extraction unit 82 is configured to extract, from the blockchain BC, the trading record ReT which is older than the item data in the chronological order.

The data extraction unit 82 is configured to acquire a main-body data associated with the hash value of the trading record ReT, i.e. information such as the name of the trader TR (factory, line, or the like), date and time, and the name of the item. The data extraction unit 82 may be configured to acquire the information of date and time by requesting the timestamp server 90. The data extraction unit 82 is configured to generate the providing data PD by arranging the main-body data based on the structure of the Merkle tree of the hash values of the blockchain BC (see step S184). In the providing data PD, the trading record ReT in the later step is arranged in an upper layer, and the trading record ReT in the earlier step is arranged in a lower layer.

The data verification unit 83 is configured to perform a data verification process to determine whether the trading record ReT extracted by the data extraction unit 82 is tampered (see step S183). The data verification unit 83 is configured to repeatedly calculate the Merkle root by combining the hash values that are the trading records ReT based on the shape of the Merkle tree. When the hash value acquired as the item data by the request receiving unit 81 is identical with the hash value calculated from the trading record ReT, the data verification unit 83 determines that no trading record is tampered. In contrast, the hash values are not identical, the data verification unit 83 determines that the trading record ReT may be tampered.

When the data verification unit 83 determines that the trading record ReT may be tampered, the data supply unit 84 transmits a value indicating an error to the user terminal 110. In contrast, when the data verification unit 83 determines that no trading record ReT is tampered, the data supply unit 84 transmits the providing data PD generated by the data extraction unit 82 to the user terminal 110 which made the request (see step S185).

The user terminal 110 is an electronic device having a computer function such as a smartphone, a tablet terminal, and a dedicated terminal. The user terminal 110 is configured to scan the item code QRi attached to the specific item IMs such as the final product FP, and display past trading records ReT indicating the distribution channel. The user terminal 110 includes a camera 116, a display 117, and a control circuit 120 equipped with a processor 111, RAM 112, a storage unit 113, an input/output interface 114, and a bus connecting those together.

The camera 116 is configured to generate the image data of the item code QRi attached to the delivered item IMi or the specific item IMs, and provide it to the control circuit 120. The display 117 is a display device such as a crystal panel, and is configured to display various images on its screen. The display 117 has a touch panel function to accept user operations.

The processor 111 is hardware for arithmetic processing combined with the RAM 112. In the storage unit 113, a trading record display program for visualizing the trading record ReT is stored. The trading record display program is an application program (hereinafter, referred to as a traceability checker application) distributed through the network NW. The traceability checker application can be downloaded to the storage unit 113 by scanning the two-dimensional code recording a site information by the camera 116.

When the traceability checker application is activated by the user operation onto the display 117, the processor 111 accesses the RAM 112 to perform processes related to tracking of the trading record ReT. Specifically, the control circuit 120 has functional units such as a code extraction unit 121, the request transmission unit 122, a data receiving unit 123, and a display control unit 124 based on the traceability checker application.

The code extraction unit 121 is configured to acquire the image data of the item code QRi from the camera 116. The code extraction unit 121 is configured to obtain the item data that is the hash value recorded in the item code QRi by analyzing the image data (see step S121). The request transmission unit 122 is configured to transmit the item data obtained by the code extraction unit 121 to the data management server 60 together with the reference request of the trading record ReT (see step S122).

The data receiving unit 123 is configured to receive the providing data PD returned from the data management server 60 in response to the reference request from the request transmission unit 122 (see step S123). The providing data PD contains the trading record ReT related to the specific item IMs.

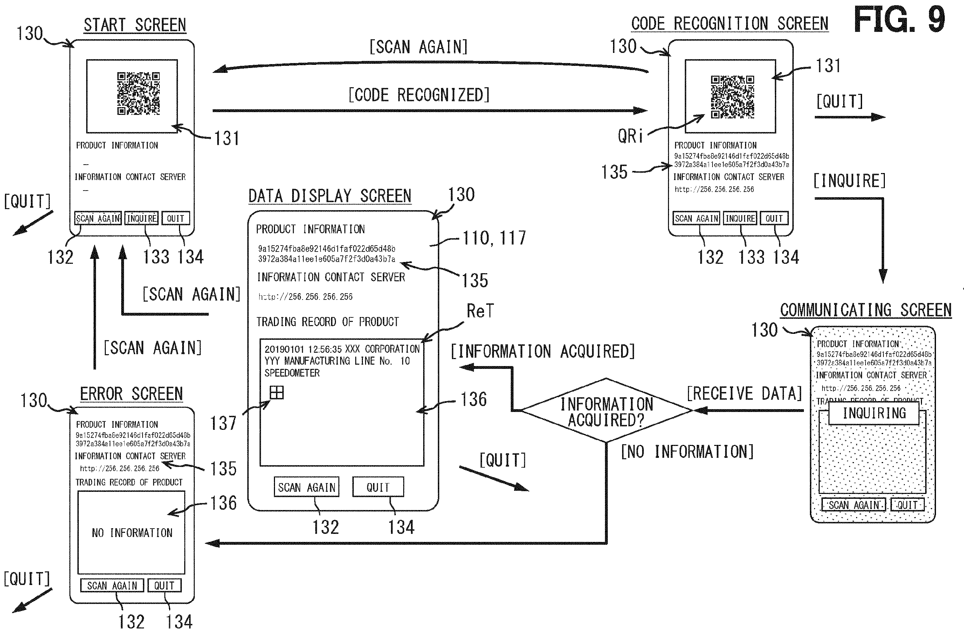

The display control unit 124 is a functional unit configured to control the content displayed on the display 117. The display control unit 124 is configured to generate display data (see step S124) using the providing data PD received by the data receiving unit 123, and display the trading record ReT on the display 117 (see step S125). The display control unit 124 is configured to display a GUI screen 130 (see FIG. 9) for inquiring and presenting the trading record ReT based on the traceability checker application. The display control unit 124 is configured to transition the GUI screen 130 based on the user operation and the communication with the data management server 60.

The display control unit 124 is configured to display a start screen as the GUI screen 130 when the traceability checker application is activated by the user's tap operation. In the start screen, a code recognition region 131 and multiple tap icons such as a rescan button 132, an inquiry button 133, and a quit button 134 are displayed. The code recognition region 131 is a display region in which the image data of the camera 116 is displayed. When the user terminal 110 is moved such that the item code QRi is displayed in the code recognition region 131, the item code QRi is recognized by the code extraction unit 121. As a result, the GUI screen 130 transitions from the start screen to a code recognition screen.

In the code recognition screen, a code information display region 135 is displayed in addition to the code recognition region 131 and the tap icons. In the code information display region 135, the hash value that is the item data and IP address or URL of a contact server are displayed as the information read from the item code QRi by the code extraction unit 121. When the tap operation on the inquiry button 133 is input under such a state, the GUI screen 130 transitions from the code recognition screen to a communicating screen.

On the communicating screen, a message such as "INQUIRING" is displayed. When the error is returned as a result of the inquiry to the data management server 60, the GUI screen 130 transitions from the communicating screen to an error screen. On the error screen, an acquired information display region 136 is provided in addition to the code information display region 135, the rescan button 132, and the quit button 134. On the error screen, a message such as "NO INFORMATION. PLEASE CONTACT THE MANUFACTURER." is displayed in the acquired information display region 136.

In contrast, when the providing data PD is returned as a result of the inquiry to the data management server 60, the GUI screen 130 transitions from the communicating screen to a data display screen. In the data display screen, the code information display region 135, the rescan button 132, the quit button 134, and the acquired information display region 136 are provided similarly to the error screen. On the data display screen, the trading records ReT related to the specific item IMs are displayed in a hierarchical manner in the acquired information display region 136.

Specifically, in multiple trading records ReT contained in the providing data PD, the trading record ReT of the trader TR who shipped the specific item IMs is displayed first. When an expansion button 137 displayed in the acquired information display region 136 is tapped by the user in such a state, the trading record ReT of the precedent step precedent to the trading record ReT that is being displayed is appeared. The user can browse the trading record ReT in a deeper layer, or an older trading record ReT, by repeatedly tapping the expansion button 137 as described above. When multiple trading records ReT are expanded, the acquired information display region 136 becomes scrollable.

In the first embodiment described above, the item traded between multiple traders TR is accompanied by a hash value that reflects the results of preceding trades. According to the above, the trading records ReT between the traders TR are accumulated with small volume of data attached to the item as the item is distributed so as not to tamper the trading records ReT. According to the above, the management of the supply chain SC can be appropriately performed.

Further, when the hash value is used as the item data as described in the first embodiment, the item data can be recorded in the item code QRi even if the capacity of the item code QRi for recording information is limited to dozens of kilobytes, for example. According to the above, unique item data of new shipped item IMo can be distributed together with the shipped item IMo by attaching the item data at each step using the advantage of the two-dimensional code. Accordingly, the management of the supply chain SC can be realized using hash values.

In the first embodiment, the hash value attached to the shipped item IMo is calculated based on the item data, the company data, and the timestamp data associated with the date and time when the delivered item IMi was at the specific vendor TRs. According to this, the time information indicating the time when the transaction was made can remain in the trading record ReT. This can improve the reliability of the supply chain SC.

In the first embodiment, the fraud in the transaction between traders TR is detected based on the chronological order indicated by the timestamp data. According to this, it is possible to detect irregularities such as reversals. As a result, the reliability of the supply chain SC can be further improved.

In addition, unique company data is given by the certifier Cer to each trader TR in the first embodiment. It is determined whether the company data provided by the user device 10 is legitimate data. According to the above, the situation where products, parts, and raw materials MAT are introduced into the supply chain SC by vendors who are not authorized by the certifier Cer can be prevented with a high degree of certainty.

In the first embodiment, the location data is also used for calculating the hash value that is the item data. This makes it possible to detect fraud related to the place of origin and place of production with a high degree of certainty. As a result, the reliability of the supply chain SC can be further improved.

Further in the first embodiment, duplication of the item data transmitted to the data management server 60 can be detected using the concept of UTXO of the blockchain BC. Specifically, when inconsistencies occur in terms of the number and weight of the shipped items IMo produced and manufactured from the delivered items IMi, such inconsistencies can be detected by using the concept of UTXO of the blockchain BC for preventing double-spending. According to the process to determine whether each shipped item IMo is an unused item, it becomes practically impossible to introduce unauthorized materials and products. Accordingly, the reliability of the supply chain SC can be further improved.

Further in the first embodiment, the trading records ReT related to the specific item IMs can be acquired from the data management server 60 by reading the item data attached to the specific item IMs. Accordingly, the user can refer to the records of the trade between the traders TR with small volume of data attached to the item.

Further in the first embodiment, the trading records ReT are displayed in the hierarchical manner reflecting the distribution channel of the specific item IMs, and accordingly the user can easily understand the trading records ReT. According to this, the convenience can be improved, and the supply chain SC can be easily managed appropriately.

Further in the first embodiment, the trading records ReT related to the specific item IMs are extracted from the accumulated trading records ReT in response to the reference request transmitted from the user terminal 110. Then, the providing data PD based on the extracted trading records ReT is provided to the user terminal 110. Since the required trading records ReT are organized by the data management server 60 as described above, it is easy for the user to access the trading records ReT to which the user wants to refer.

In the above-described embodiment, the item code QRi corresponds to "two-dimensional code", the company data corresponds to "node identification data", and the specific vendor TRs corresponds to "specific entity". The user device 10 corresponds to "user node", the information acquiring unit 21 corresponds to "acquiring unit", and the information transmission unit 22 corresponds to "transmission unit". The data management server 60 corresponds to "host node", each of the server device 60a and the processing circuit 10a corresponds to "computer". In addition, the chain generation unit 73 corresponds to "calculation unit", the code supply unit 74 corresponds to "providing unit", and the user terminal 110 corresponds to "requester".

### (Application example of first embodiment)

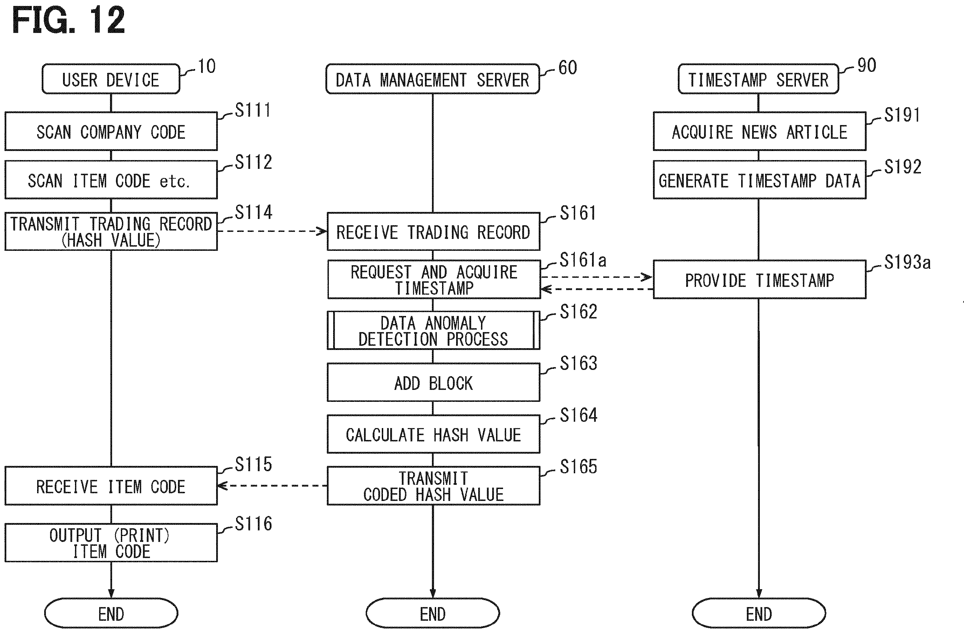

An application example, in which the supply chain management method according to the first embodiment is used for the management of the trading records ReT of the supply chain SC for supplying breads, will be described with reference to FIGS. 8, 10-12. The chain generation process shown in FIG. 12 is a modification example of the chain generation process shown in FIG. 7. In the chain generation process of the application example, the data management server 60 acquires the timestamp from the timestamp server 90.

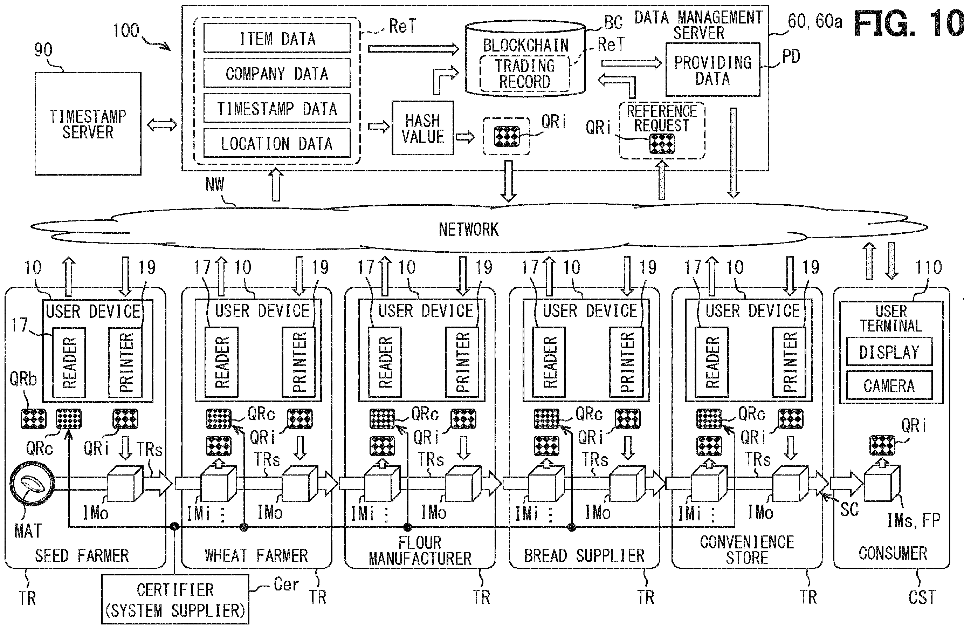

The supply chain SC includes multiple traders TR involved in the manufacture and sale of bread that is the final product FP. For example, a seed farmer, a wheat farmer, a flour manufacturer, a bread supplier, and a convenience store correspond to the traders TR of the supply chain SC and form a distribution channel for the bread (see FIG. 10).

Specifically, in the distribution channel for the bread, (1) the seed farmer ships wheat seeds to the wheat farmer, (2) the wheat farmer ships the wheat grown from the seeds to the flour manufacturer, and (3) the flour manufacturer processes the wheat and ships the resulting flour to the bread supplier. Subsequently, (4) the bread supplier ships the bread produced from the flour to the convenience store, and (5) the convenience store sells the procured bread to the consumers. Then, (6) the consumers can refer to the raw material MAT, the processing process, and the distribution channel of the purchased bread.

The seed farmer described in the above step (1) prepares the basic information code QRb in advance based on the initial setting data. The issuance of the basic information code QRb is carried out through the initial setting process (see FIG. 11) in cooperation of the user device 10 of the seed farmer and the data management server 60. In the initial setting process, the user device 10 acquires information, as the initial setting data, of the land, equipment, pesticides and fertilizers required for seed production (see step S101). The user device 10 prepares the initial setting data by scanning text data and manual input by the worker of the seed farmer. The user device 10 transmits the acquired initial setting data to the data management server 60 through the network (see step S102). Address of the seed farmer and location data by the GPS may be used as land information.

The data management server 60 receives the initial setting data transmitted from the user device 10 (see step S151). The data management server 60 lists the acquired initial setting data in a predetermined data format (see step S152), and generates the hash value associated with the initial setting data list (see step S153). The data management server 60 saves the initial setting data list in a state where the initial setting data can be referred using the hash value. In addition, the data management server 60 adds the generated hash value into the blockchain BC (see step S154). The hash value calculated from the initial setting data of the trader TR who supplies the raw material MAT is incorporated into the first block of the blockchain BC. The data management server 60 generates the basic information code QRb in which the hash value is recorded, and transmits the basic information code QRb to the user device 10 of the seed farmer (see step S155).

The user device 10 of the seed farmer acquires the basic information code QRb transmitted from the data management server 60 (see step S103). The user device 10 outputs the received basic information code QRb by printing it out on a paper medium, for example (see step S104). As described above, the basic information code QRb is prepared at the seed farmer.

In the basic information code QRb, information based on the initial setting data other than the hash value may be recorded. For example, the initial setting data registered to the blockchain BC, i.e. information about the land for growing the seed, the equipment, the pesticides, and the fertilizers, may be recorded in the basic information code QRb as text data or image data. The initial setting data identical with the contents registered in the blockchain BC may be directly recorded in the basic information code QRb as text data or image data instead of the hash value.

When the seeds produced by the seed farmer are shipped, the chain generation process is performed through the collaboration of the user device 10 of the seed farmer, the data management server 60, and the timestamp server 90 (see FIG. 12). The user device 10 of the seed farmer scans the company code QRc issued by the certifier Cer and the basic information code QRb prepared in advance in order (see steps S111, S112). The user device 10 transmits the hash values of the codes acquired by the scan to the data management server 60 as the current trading record ReT (see step S114).

At least one of the company data or the initial setting data may be registered in the user device 10 in advance. In this case, the data read from the storage unit 13 (see FIG. 2) of the user device 10 is transmitted to the data management server 60.

The data management server 60 receives the hash values transmitted from the user device 10 of the seed farmer and acquires it as the trading record ReT (see step S161). The data management server 60 requests the timestamp server 90, upon obtaining the trading record ReT, to provide the timestamp code QRt (or timestamp data). The data management server 60 acquires the timestamp code QRt provided based on the request (see steps S161a, S193a).

The data management server 60 performs the data anomaly detection process (see step S162 and FIG. 5). In the data anomaly detection process for the trading record ReT obtained from the trader TR who supplies the raw material MAT, a part of the process such as the step for checking whether the item is unused and the step for checking the consistency of the chronological order (see steps S34-S36 of FIG. 5) may be omitted. When the data management server 60 confirms that the data contain no anomaly, the data management server 60 adds the block generated based on the trading record ReT of the initial setting data and the timestamp data to the last of the blockchain BC (see step S163).

Further, the data management server 60 calculates the hash value of the last block (see step S164), and records the shipped item IMo to which the calculated hash value is attached as an unused item. The data management server 60 transmits the item code QRi in which the calculated hash value is recorded to the user device 10 of the seed farmer (see step S165).

The user device 10 of the seed farmer receives the item code QRi transmitted by the data management server 60 (see step S115), and outputs the received item code QRi on a paper medium by printing (see step S116). The seed farmer attaches the printed item code QRi on a package of the seeds, for example, and ships it to the wheat farmer.

At the wheat farmer described in the above step (2), the user device 10 scans the item code QRi attached to the package of the purchased seeds, and the company code QRc issued for the wheat farmer by the certifier Cer (see steps S111, S112). When the wheat farmer registered the initial setting data, the user device 10 further scans the basic information code QRb. For example, the wheat farmer can register the information of the land on which the wheat is grown to the data management server 60. The user device 10 of the wheat farmer transmits the hash values read from the codes to the user device 10 (see step S114).

The data management server 60 acquires the hash values transmitted from the user device 10 of the wheat farmer as the trading record ReT (see step S161). The data management server 60 obtains, from the timestamp server 90, the timestamp for recording the date and time when the hash value is acquired (see steps S161a, S193a). The data management server 60 checks whether no anomaly exists through the data anomaly detection process (see step S162 and FIG. 5). The data management server 60 adds the block generated based on the trading record ReT such as the item data, the initial setting data, and the timestamp data to the last of the blockchain BC (see step S163). The data management server 60 calculates the hash value of the last block (see step S164), and transmits the item code QRi in which the calculated hash value is recorded to the user device 10 of the wheat farmer (see step S165).

The user device 10 of the wheat farmer receives the item code QRi transmitted by the data management server 60 (see step S115), and outputs the received item code QRi on a paper medium by printing (see step S116). The wheat farmer attaches the printed item code QRi on a package of the wheat, for example, and ships it to the flour manufacturer.

At the flour manufacturer described in the above step (3), the user device 10 scans the item code QRi attached to the package of the purchased wheat, and the company code QRc issued for the flour manufacturer by the certifier Cer (see steps S111, S112). When the flour manufacturer registered the initial setting data, the user device 10 further scans the basic information code QRb. For example, the flour manufacturer can register information about equipment and manufacturing methods for producing wheat flour to the data management server 60. The user device 10 of the flour manufacturer transmits the hash values read from the codes to the user device 10 (see step S114).

The data management server 60 acquires the hash values transmitted from the user device 10 of the flour manufacturer as the trading record ReT (see step S161). The data management server 60 obtains, from the timestamp server 90, the timestamp for recording the date and time when the hash value is acquired (see steps S161a, S193a). The data management server 60 checks whether no anomaly exists through the data anomaly detection process (see step S162 and FIG. 5). The data management server 60 adds the block generated based on the trading record ReT such as the item data, the initial setting data, and the timestamp data to the last of the blockchain BC (see step S163). The data management server 60 calculates the hash value of the last block (see step S164), and transmits the item code QRi in which the calculated hash value is recorded to the user device 10 of the flour manufacturer (see step S165).

The user device 10 of the flour manufacturer receives the item code QRi transmitted by the data management server 60 (see step S115), and outputs the received item code QRi on a paper medium by printing (see step S116). The flour manufacturer attaches the printed item code QRi on a package of the flour, for example, and ships it to the bread supplier.

At the bread supplier described in the above step (4), the user device 10 scans the company code QRc issued for the bread supplier by the certifier Cer (see step S111). In addition, the user device 10 scans the item codes QRi attached to each package of purchased materials of the bread such as the flour, yeast, salt, water, and sugar, in order (see step S112). When the bread supplier registered the initial setting data, the user device 10 further scans the basic information code QRb. For example, the bread supplier can register information about equipment and manufacturing methods for producing bread to the data management server 60. The user device 10 of the bread supplier transmits the hash values read from the codes to the user device 10 (see step S114).

The data management server 60 acquires the hash values transmitted from the user device 10 of the bread supplier as the trading record ReT (see step S161). The data management server 60 obtains, from the timestamp server 90, the timestamp for recording the date and time when the hash value is acquired (see steps S161a, S193a). The data management server 60 checks whether no anomaly exists through the data anomaly detection process (see step S162 and FIG. 5). The data management server 60 adds the block generated based on the trading record ReT such as the item data, the initial setting data, and the timestamp data to the last of the blockchain BC (see step S163).

The trading record ReT obtained from the bread supplier contains the item data of materials such as the flour, yeast, salt, water, and sugar. In the data management server 60, multiple blockchains BC each of which accumulates the trading records ReT of each material are joined together as a result of the processing at the bread supplier. As a result, the data structure of the blockchain (distributed ledger) BC is not a linear structure connecting each block linearly but a tree structure or a radial structure in which multiple blocks are connected to one specific block. According to such a data structure, each material can be traced from one item data, and accordingly the transparency of the distribution channel to the user and the searchability can be improved.

The flour may be used for foods other than bread such as udon. Accordingly, information of the hash value generated as the item data may be spread to multiple items in the next step. In such a case, the data structure of the blockchain is a tree structure or a radial structure in which one block is connected to multiple blocks.

The data management server 60 calculates the hash value of the last block (see step S164) associated with the trading records ReT of multiple materials, and transmits the item code QRi in which the calculated hash value is recorded to the user device 10 of the bread supplier (see step S165).

The user device 10 of the bread supplier receives the item code QRi transmitted by the data management server 60 (see step S115), and outputs the received item code QRi on a paper medium by printing (see step S116). The bread supplier attaches the printed item code QRi to the package of the bread, and ships it to a retail store such as a convenience store.

At the convenience store described in the above step (5), the user device 10 scans the item code QRi attached to the package of the purchased bread, and the company code QRc issued for the convenience store by the certifier Cer (see steps S111, S112). When the convenience store registered the initial setting data, the user device 10 further scans the basic information code QRb. For example, the convenience store can register information such as a store name to the data management server 60. The user device 10 of the convenience store transmits the hash values read from the codes to the user device 10 (see step S114).

The data management server 60 acquires the hash values transmitted from the user device 10 of the convenience store as the trading record ReT (see step S161). The data management server 60 obtains, from the timestamp server 90, the timestamp for recording the date and time when the hash value is acquired (see steps S161a, S193a). The data management server 60 checks whether no anomaly exists through the data anomaly detection process (see step S162 and FIG. 5). The data management server 60 adds the block generated based on the trading record ReT such as the item data, the initial setting data, and the timestamp data to the last of the blockchain BC (see step S163). The data management server 60 calculates the hash value of the last block (see step S164), and transmits the item code QRi in which the calculated hash value is recorded to the user device 10 of the convenience store (see step S165).

The user device 10 of the convenience store receives the item code QRi transmitted by the data management server 60 (see step S115), and outputs the received item code QRi on a paper medium by printing (see step S116). A clerk of the convenience store attaches the printed item code QRi to the package of the bread, and displays it on a product shelf or the like. As a result, the bread is supplied to the consumer CST.

The consumer CST described above as the step (6) can refer to the trading records ReT of the bread by installing the traceability checker application on the user terminal 110. The consumer CST of the bread scans the item code QRi attached to the bread with the user terminal 110 using the traceability checker application. As a result, the user terminal 110 obtains the item data (hash value) recorded in the item code QRi (see step S121 of FIG. 8), and transmits the obtained item data with the reference request to the data management server 60 (see step S122).

The data management server 60 obtains the reference request and the item data of the bread transmitted from the user terminal 110 (see step S181). The data management server 60 identifies the blockchain BC associated with the obtained item data, and the trading records ReT accumulated in the blockchain BC (see step S182). The data management server 60 verifies the identified trading records ReT (see step S183), and then generates the providing data PD by reproducing the distribution channel of the bread in the tree shape (see step S184). The data management server 60 transmits the generated providing data PD to the user terminal 110 which made the request (step S185).

When the user terminal 110 receives the providing data PD based on the reference request from the data management server 60 (see step S123), the user terminal 110 generates the display data using the providing data PD (see step S124). The user terminal 110 displays the trading records ReT accumulated in the distribution channel of the bread (see step S125) in the acquired information display region 136 of the display 117 (see FIG. 9).

According to the application example of the first embodiment described above, by the management method in which the hash values are attached to the items that reflect the trading results, past trading records ReT from the raw material MAT to the final product FP are accumulated with small volume of data attached to the items in a manner in which the trading records ReT is difficult to be tampered. Accordingly, the management of the supply chain SC can be appropriately performed.

In the above application example, the distribution channel of the bread from the raw material MAT (seeds of wheat) to the final product FP (bread) supplied to the consumer CST is explained as an specific example. However, the management method of the first embodiment can be applied to the supply chain SC of another item. For example, the above-described management method can be applied to the supply chain of communication terminals, the supply chain of new or used cars, the supply chain of processed foods, ingredients, beverages, alcoholic beverages, fishery products, or meat, and the supply chain of pharmaceuticals.

Further, the above-described supply chain management method is not limited to the supply chain SC of tangible objects, and can be applied to the supply chain SC of intangible objects. Specifically, the above-described management method can be applied to the supply chain of electronic commerce via the internet, the supply chain of payee information in the transfer of bills and other securities, the supply chain from procurement of building materials to construction of buildings.

Further, the supply chain SC of services can be managed using the blockchain BC. Specifically, the relationship between the provider and the recipient of the service can be recorded as the trading record ReT by coding the provider and the recipient of the service in advance and scanning the code at the time of the service use or the service provision. As an example, the process of handing down techniques related to traditional crafts, that is, the genealogy of teacher-apprentice relationships, and the relationships between providers and beneficiaries of knowledge and techniques related to specific qualifications can be managed using blockchain BC. Further, with respect to the traditional crafts produced by handicrafts of craftsmen, the history information of the processing performed by the individual craftsmen who are in charge of each process may be recorded using the blockchain BC. In this case, the value of the finished craft can be permanently guaranteed. In addition, a connection such as a baton relay on SNS may be recorded by the blockchain BC.

### (Second Embodiment)

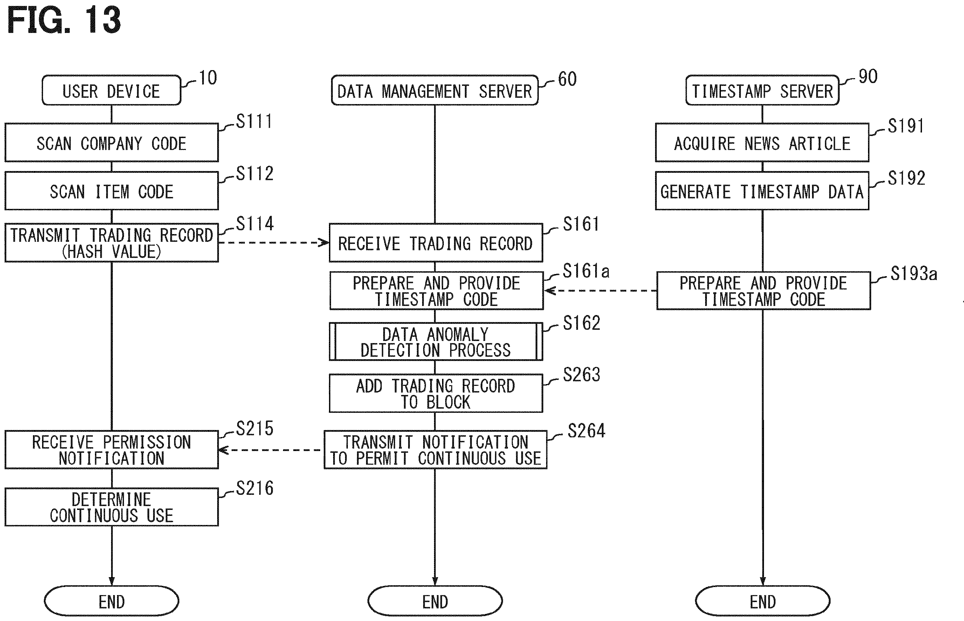

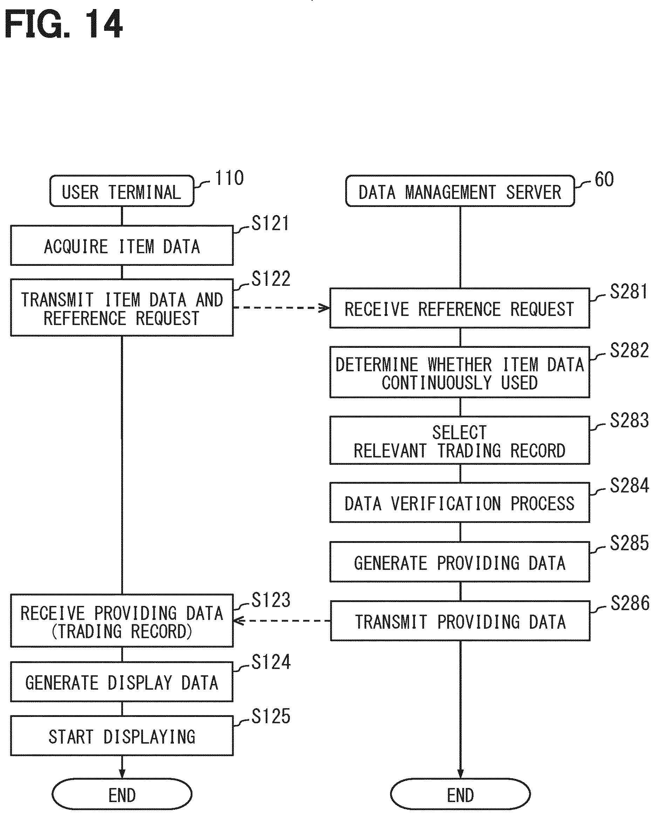

A second embodiment of the present disclosure illustrated in FIGS. 13, 14 is a modification of the first embodiment. In the chain generation process (see FIG. 13) according to the record generation program of the second embodiment, the issuance of the hash value and the item code QRi at each trader TR is omitted. Further, in the record reference process (see FIG. 14) according to the record reference program, the trading records ReT in the steps subsequent to the issuance of the item code QRi are extracted together with the past trading records ReT. Hereinafter, the chain generation process and the record reference process of the second embodiment will be described with reference to FIG. 1, focusing on the points that differ from the first embodiment.

When the data management server 60 obtains the item data and the company data (see step S161) from the specific vendor TRs (see FIG. 1) in the chain generation process (see FIG. 13), the data management server 60 obtains the timestamp data from the timestamp server 90 (see step S161a). The data management server 60 identifies the blockchain BC that manages the supply chain SC of the item to which the item data is attached, and determines whether the data contains anomaly (see step S162 and FIG. 5). When the data management server 60 confirms that the data contain no anomaly, the data management server 60 adds the block generated based on the trading record ReT such as the item data and the timestamp data to the last of the blockchain BC (see step S263). According to this, the current trading record ReT (for example, the processing information) of the specific vendor TRs is accumulated in the blockchain BC in association with the item data. In the second embodiment, the trading records ReT of multiple traders TR are associated with one item data.

The data management server 60 determines whether or not to permit the continuous use of the item data after the registration of the current trading record ReT is completed. The data management server 60 transmits a notification to permit the continuous use of the item data to the user device 10 of the specific vendor TRs who transmitted the item data (see step S264).

When the user device 10 of the specific vendor TRs receives the permission notification transmitted from the data management server 60 (see step S215), the user device 10 of the specific vendor TRs determines to continuously use the item data attached to the delivered item IMi (see step S216). Accordingly, at the specific vendor TRs, the item code QRi attached to the delivered item IMi is used as the item code QRi attached to the shipped item IMo. In this case, the user device 10 notifies the user of the continuous use by a message such as voice or screen display.

Even when it is decided to continuously use the item data, the user device 10 may output the same item code QRi as that attached to the delivered item IMi if it is physically difficult to continuously use the item code QRi. For example, when the item code QRi attached to the delivered item IMi is damaged or soiled and it is difficult to read the item data from the item code QRi, the user device 10 print out the item code QRi for attaching it to the shipped item IMo. Further, when the package of the shipped item IMo is different from the package of the delivered item IMi, the user device 10 may print out the item code QRi in which the same item data is recorded.

In the record reference process (see FIG. 14), the data management server 60 obtains the reference request and the item data transmitted from the user terminal 110 (see step S281). The data management server 60 identifies the blockchain BC of the item to which the acquired item data is attached. The data management server 60 refers to the information associated with the blockchain BC to determine whether the acquired item data is being continuously used by multiple traders TR (see step S282). Specifically, when the trading records ReT of the multiple traders TR are associated with the acquired item data, the data management server 60 determines that the item data is continuously used.

The data management server 60 extracts the trading records ReT related to the acquired item data from multiple trading records ReT managed using the blockchain BC (see step S283). Specifically, when the item data is associated with only trading records ReT of one trader TR, the data management server 60 picks up the trading records ReT between the traders TR and the past (preceding) trading records ReT as the target to be provided. In contrast, when the item data is continuously used by multiple traders TR and is associated with the trading records ReT of multiple traders TR, the data management server 60 pick up all of the trading records ReT of those traders TR and the preceding trading records ReT as the target to be provided.

The data management server 60 performs the data verification process for the selected trading records ReT (see step S284), and generates the providing data PD based on the extracted trading records ReT (see step S285). The data management server 60 provides the generated providing data PD to the user terminal 110 which made the reference request (see step S286). When the user device 10 acquires the providing data PD transmitted from the data management server 60, the user device 10 displays the trading records ReT related to the item as in the first embodiment (see steps S123-S125).

In the above-described second embodiment, the item data attached to the shipped item IMo is continuously used by multiple traders TR. Accordingly, the volume of the item data is unlikely to increase as the distribution process progresses. In the blockchain BC, the trading records ReT of multiple traders TR are accumulated in association with one item data that is continuously used. Accordingly, the trading records ReT of the item traded between the traders are accumulated in the blockchain BC as the item is distributed in a manner that makes it difficult to tamper the trading records ReT, while keeping the volume of data attached to the item to a minimum. Accordingly, the supply chain SC can be appropriately managed according to the second embodiment.

Additionally, in the second embodiment, the trading records ReT of multiple traders TR can be associated with one item data. All trading records ReT of multiple traders TR who used the item data are extracted in response to the reference request, and the trading records ReT are provided to the requester. Accordingly, the providing data PD always contains the trading record ReT (for example, processing information) of the trader TR who last used the item data. Accordingly, even if the item code QRi attached to the delivered item IMi is continuously used for the shipped item IMo, appropriate trading records ReT can be provided in response to the reference request which is received with the item data.

More specifically, when the item data is continuously used, the information of the processing by the specific vendor TRs is not reflected in the item data (hash value) attached to the item processed by the specific vendor TRs. However, the information of the processing by the specific vendor TRs is reflected in the blockchain BC. That is, the information of the raw materials, the processing, the producer, the processor, and time of the the processed product shipped from the specific vendor TRs is collectively recorded in the blockchain BC. Accordingly, even when the item code QRi is issued several steps before, the entire history up to the immediately preceding step can be referred by scanning the item code QRi attached to the item (e.g. the raw material at a certain step).

Specifically, when the process of processing proceeds through multiple traders TR in the supply chain SC, the item code QRi attached to the processed item in each step may be the item code QRi issued to the first trader TR which is the starting point of the process. Accordingly, the issuance of the item code QRi can be simplified.

In this case, the item code QRi continuously used has contents that reflect the raw material information and does not reflect the processing information. However, the trader TR of the supply chain SC can obtain the information of the details of the processing performed in the preceding steps and raw material information used in the preceding steps by accessing the blockchain BC. Accordingly, all or a specific section of the supply chain SC can be managed with one item code QRi, and the traceability of the raw materials and processing steps can be ensured.

For example, in the supply chain SC related to the supply of breads (see FIG. 10), the item code QRi (item data), which is an embodiment of the information of wheat as a raw material, is consistently used. Accordingly, the bread supplier attaches the item code QRi containing the wheat information to the bread that is the final product.

In this case also, the processing information at the flour manufacturer and the bread supplier is accumulated in the blockchain BC. Accordingly, the bread supplier can refer to the processing history in the preceding steps using the item code QRi attached to the flour. Similarly, the consumer CST of the bread who is the end user can refer to the processing information at the bread supplier using the item code QRi attached to the bread. As described above, the issuance of the item code QRi containing the processing information at the flour manufacturer and the bread supplier can be omitted.

### (Third Embodiment)

The third embodiment of the present disclosure is another modification example of the first embodiment. The supply chain management system 100 of the third embodiment is designed on the assumption that the supply chain management system 100 is used together with another management system configured to manage the supply chain SC. Another management system is, for example, a management system (hereinafter, referred to as conventional management system) that does not use the blockchain BC.

In such a system configuration, the item code QRi of the third embodiment uses information used for the management by the conventional management system and information (item data) used for the supply chain management system 100. Specifically, the two-dimensional code used as the item code QRi has multiple (two) regions for registering data.

In one region (hereinafter, a first region), the information used by the conventional management system is registered. For example, in the first region, the format of data recorded in the first region, the number of data, the data itself, and the terminal symbol of the first region are recorded. In another region (hereinafter, a second region), the information used by the supply chain management system 100 is registered. For example, in the second region, the format of data recorded in the second region, the number of data, the data itself, and the terminal symbol of the second region are recorded.

Further, the second region is a secret region which cannot be read by the conventional management system. Accordingly, the data recorded in the second region can be used only by the user device 10 of the supply chain management system 100. For example, the secrecy of the second region from terminals of the conventional management system is achieved by changing the reflectivity of the second region of the item code QRi. In this case, the reflectivity of the second region (secret region) is lower than that of the first region (public region).

When such item code QRi is attached to the distributed item, the terminals of the conventional management system can selectively read the information in the first region when the terminal of the conventional management system uploads the information of the item to the conventional management system. That is, the information in the second region can be intentionally ignored by the terminal of the conventional management system.

In contrast, the reader 17 of the user device 10 can read the second region that is kept secret. The user device 10 can software-defined ignore the information read from the first region and selectively transmit the item data read from the second region to the data management server 60.

The user device 10 is configured to output (print out) the item code QRi in which the information for both systems is included. Specifically, the user device 10 acquires, from the data management server 60, the item data generated in a processable format such as an image format, a text format, and a program code format. In addition, the user device 10 acquires the output data used in the conventional management system from the server of the conventional management system. The user device 10 generates the item code QRi in which the output data of the conventional management system is recorded in the first region and the item data is recorded in the second region, and prints out the item code QRi by the printer 19.

The item code QRi may be printed out by the terminal of the conventional management system. In this case, the user device 10 provides the item data to the terminal of the conventional management system in a format that can be processed by the terminal. As a result, the terminal of the conventional management system can output, from the issuing machine or the like, the item code QRi which has management information used by each system.

According to the third embodiment described above, the same effects as the first embodiment can be obtained, and the supply chain SC can be appropriately managed using the item code QRi containing the information for each system.

Further, in the third embodiment, the terminal of the conventional management system cannot read the information in the second region. Accordingly, a problem in reading the information by the terminal of the conventional management system or the user device 10 is unlikely to occur due to the fact that the item code QRi contains two types of information. According to the above, the supply chain management system 100 can be managed collaboratively with the conventional management system without changing the conventional management system. Accordingly, the supply chain management system 100 compatible with the conventional management system can be realized.

The management system to which the first region or the second region is allocated may be changeable. For example, it is assumed that another management system (hereinafter, referred to as future system) newer than the supply chain management system 100 is introduced after the operation of the supply chain management system 100 is stabilized. In this case, the allocation of the recording regions may be changed. For example, the information (item data) for the supply chain management system 100 may be recorded in the first region, and the information for the future system may be recorded in the second region. As described above, by changing the recording region for the information from the secret region to the public region in accordance with the update o the management system, the system can be smoothly updated.

The following additional notes will be further disclosed as technical features relating to the third embodiment described above.

### (Note 1)

An information code attached to an item traded between traders (TR) of a supply chain (SC) formed of the traders, the information code being scanned by scanners of multiple management systems configured to manage the supply chain, and the information code including: a first region scanned by a first scanner and recording first information used by a first management system; and a second region scanned by a second scanner and recording second information used by a second management system.

The second region of the information code (two-dimensional code, barcode, or the like) of the above Note 1 is not recognized by the first scanner. In the first region, the terminal symbol that notifies the first scanner of the terminal of the read is provided. The second region is arranged after the terminal symbol of the first region in the reading order of the first scanner. In contrast, the second scanner excludes the first information recorded in the first region from the recognition target, and sets the second region after the terminal symbol as the recognition target.

The information code may have additional recording regions (third region, fourth region...) other than the first region and the second region. In this case, third information used by a third management system is recorded in the third region. Similarly, fourth information used by a fourth management system is recorded in the fourth region. As described above, multiple recording regions may be provided in the information code according to the number of the management system that manages the trading record of the item. As a result, each recording region of the information code can serve as a dedicated recording region for new or old system when the management system is updated, or a recording region dedicated to the management system of retailers selling the item, for example.

### (Other Embodiments)

Although a plurality of embodiments according to the present disclosure have been described above, the present disclosure is not construed as being limited to the above-mentioned embodiments, and can be applied to various embodiments and combinations within a scope not departing from the spirit of the present disclosure.

In a first modification example of the above-described embodiment, the item data is attached to the distributed item using RFID (radio frequency identifier) technique. In the first modification example, an RFID tag is used as the data recording medium attached to the distributed item instead of the paper medium on which the two-dimensional code is printed. When the RFID is used, the reader 17 of the user device 10 is configured to read the item data recorded in the RFID tag by short-range wireless communication. In addition, the user device 10 has a writer configured to rewrite the information recorded in the RFID tag instead of the printer 19.

The code output unit 24 records, using the writer, new hash value received by the code receiving unit 23 from the data management server 60 to the RFID tag attached to the shipped item IMo. This process corresponds to a step of "recording the item data containing at least the hash value" instead of the process (S165) by the data management server 60 for generating the item code QRi in the above-described embodiment.

By using RFID, the reader 17 can remotely read the item data even in a situation where the RFID tag is not visible, for example. Further, by repeatedly rewriting the hash value that is the item data, printing and pasting the two-dimensional code can be omitted.

Further, the two-dimensional code may be used in a part of the supply chain SC, and the RFID tag may be used in the remaining parts. Moreover, both the two-dimensional code and the RFID tag may be attached to the item. Further, a storage medium different from the two-dimensional code and the RFID tag may be distributed as the medium for recording the hash value together with the item.

Other means than the two-dimensional code and the RFID may be used for attaching the item data (hash value) to the item. Specifically, instead of a label, information embodying the hash value may be embedded by processing on the item itself such as branding, laser engraving, and cutting. Further, other medium that record the hash value using a biological method or a method using inorganic chemistry can be used. Specifically, such methods include methods can be used such as: a method using DNA information, molecular structure, element ratio or the like embodying the the hash value and applying it by spraying so as not to affect the item physiologically; and a method attaching metal material having component information embodying the hash value to a part of the item.

As described in the above-described embodiments, the process of scanning the item code QRi, the basic information code QRb, and the company code QRc and the process of uploading the scanned data to the blockchain BC may be omitted if appropriate. Specifically, in a second modification example, the hash values recorded in the basic information code QRb or the company code QRc are registered in the storage unit 13 of the user device 10 in advance. When the user device 10 scans the item code QRi embodying the product information of the delivered item, the user device 10 transmits the hash value read from the storage unit 13 to the data management server 60. Accordingly, even if the reading of the company code QRc or the like by the reader 17 is omitted, the company data (hash value) and the like is transmitted to the data management server 60 together with the item data. According to the above, the workload for recording the trading record ReT can be reduced.

In a third modification example of the second embodiment, the item code QRi is printed on a reusable paper medium. Accordingly, even when different packages are used for the delivered item IMi and the shipped item IMo, the item code QRi peeled off from the delivered item IMi can be reattached to the shipped item IMo to continuously use the physically same item code QRi. Further, the paper medium on which the item code QRi is printed may be a stack of sheets having a transfer function, and formed so that a part of which can be cut out. By using such a paper medium, the same item code QRi can be continuously used by peeling off one or a part of the paper medium as the item is distributed between the traders.

The second embodiment has an advantage as compared with the first embodiment that the issuance of the item code QRi can be omitted. In contrast, the first embodiment has an advantage as compared with the second embodiment that the search process for the trading records ReT corresponding to the item data can be reduced. Further, the first embodiment has an advantage of suppressing a situation where the item code QRi becomes difficult to be read due to physical damage to the item code QRi.

As described in the third embodiment, when the supply chain management system 100 using the blockchain BC is newly introduced in a situation where the conventional management system is in operation, a large modification of the conventional management system is required. In this case, time for the modification is also required. This made it difficult to introduce the supply chain management system 100 using the blockchain BC.

In a fourth modification example of the above-described embodiments, the item code QRi for the supply chain management system 100 is written together with or overwritten with the information for the conventional management system, and is distributed with the item. Specifically, the user device 10 of the fourth modification example transmits the image format data of the item code QRi to the issuing machine such as the printer 19 to output it on a paper medium. The printed item code QRi is attached to the package. With such a method, traceability can be easily managed by the blockchain without considering the compatibility of the old and new systems.

In the above-device examples, the information recorded in the blockchain is transmitted to the user device 10 in the image format of the two-dimensional code. However, the item data may be transmitted to the user device 10 or the issuing machine such as the printer 19 in another format such as text format and program code format, instead of image format.

In a fifth modification example of the above-described embodiments, the hash value of the timestamp data is not used for calculating the Merkle root. In a sixth modification example of the above-described embodiments, the hash value based on the location data is not used for calculating the Merkle root. As described above, the timestamp data and the location data may be used only for anomaly detection upon receiving the data, and do not have to be incorporated into the blockchain BC. The timestamp data and the location data do not have to be acquired.

In a seventh modification example of the above-described embodiments, reading the timestamp code QRt by the user device 10 is omitted. The data management server 60 receives the timestamp data as the hash value from the timestamp server 90 upon obtaining the trading records ReT from the user device 10. In an eighth modification example of the above-described embodiments, the hash value that is the timestamp data transmitted to the user device 10 is transmitted to the data management server 60 together with the item data when the item code QRi is transmitted. As described above, the automatic acquisition of the timestamp data makes it possible to reduce the code reading work in the trader TR.

In a ninth modification example of the above-described embodiments, the data anomaly detection process (see step S162) in the chain generation process is omitted. The record verification unit 72 of the ninth modification example repeats the data anomaly detection process for the acquired trading records ReT independently of the chain generation process. In a tenth modification example of the above-described embodiments, the data verification process (see step S183) in the record reference process is omitted. The data verification unit 83 of the tenth modification example repeats the data verification process for the accumulated trading records ReT independently of the record reference process.

The node identification data (company data) used in an eleventh modification example of the above-described embodiments may be a hash value based on the name of the company. Alternatively, a hash value may be generated as the company data by the data management server 60 using the identification information associated with the user device 10. As described above, the distribution of the company code QRc indicating that the certifier Cer certificates the trader TR may be omitted.

In the GUI screen 130 of a twelfth modification example of the above-described embodiments, the trading records ReT returned in response to the reference request are displayed in a list. Specifically, in the twelfth modification example, the trading records ReT are displayed in order from one with the newest (or oldest) date and time associated with the timestamp data. The display style of the trading records ReT is not limited to the tree structure (hierarchical structure), and may be changed as appropriate as in the twelfth modification. Further, the GUI screen 130 may be appropriately changed according to the type of the user terminal 110.

The item whose trading records ReT can be referred by the user terminal 110 is not limited to the final product FP. For example, a module supplier may refer to the trading records ReT of the delivered item IMi using the item code QRi attached to the delivered item IMi. Further, the user device 10 may be configured to refer to the trading records ReT of the delivered item IMi.

As described above, the trader TR is not limited to the manufacturer. For example, in a thirteenth modification example of the above-described embodiments, maintenance hitory and parts replacement history at a dealer is transmitted from the user device 10 of the dealer to the data management server 60 as the trading record ReT after the vehicle as the final product FP is passed to the user. The data management server 60 adds a block based on new trading record ReT to the blockchain generated when the vehicle is manufactured. The data management server 60 generates the item code QRi in which the hash value of the last block is recorded, and transmits it to the user device 10 of the dealer. When the item code QRi is attached to the vehicle verification in a system, a reliable supply chain SC including the maintenance of the final product FP can be set up.

Further, in a fourteenth modification example of the above-described embodiments, the traders TR includes a vehicle inspection company, a reseller, and recycling company. Each trader transmits, to the data management server 60, a request to return the hash value at a timing of vehicle inspection, resale, recycling, or the like. The data management server 60 reads the last block of the blockchain in which the manufacturing and usage records are stored, and calculates the hash value of the last block. Each trader outputs the item code QRi in which the hash value of the last block is recorded by the user device 10, and prints it on the vehicle verification or attaches it to the product resold or recycled. According to the above-described management system, a reliable supply chain SC from manufacturing to the recycling of the product can be set up.

In the above-described embodiments, the item code QRi attached to the final product FP is a normal QR code. In a fifteenth modification example of the above-described embodiments, the item code QRi composed of SQRC is attached in addition to the item code QRi composed of the normal QR code. SQRC may have a anti-copy function. By using these QR codes together, the records can be easily referred using the user terminal 110 such as smartphones, and the records can be strictly referred by scanning the SQRC with a dedicated scanner in a case where the normal QR code may be tampered.

In the above-described embodiments, the management method of the supply chain SC according to the present disclosure is applied to the industrial product. Such an application could lead to the exclusion from the supply chain SC of raw materials MAT (e.g. rare metals) that are mined through child forced labor, for example. According to the supply chain management method of the present disclosure, it is possible to prove later that certain information existed at a certain time. Accordingly, the information stored by the blockchain is also suitable for use in public audits.

The final product FP provided through the supply chain SC is not limited to the industrial product as described above. For example, when the final product is an agricultural product, the consumer CST can refer from the item code QRi attached to the final product FP to, at the retail store, a series of history information related to the land of production, the producer, inspection items, and inspection organization. Similarly, when the final product is a marine product, the consumer CST can refer, from the item code QRi attached to the final product FP, to a series of history information related to country of origin, economic zone, landing ports, fisheries, aquaculture areas, aquaculture companies, inspection items and inspection organizations. Such applications will improve consumer confidence in the safety of food products and provide reliable proof that the products are fair trade.

In the above embodiments, the respective functions provided by data management server and the timestamp server can be also provided by software and hardware for executing the software, only software, only hardware, and complex combinations of software and hardware. Similarly, each function provided by the processing circuit of the user device and the control circuit of the user terminal can be provided by software and hardware for executing the software, only software, only hardware, or a complex combination of the hardware and the software. In cases where these functions are provided by electronic circuits as hardware, the respective functions can be also provided by analog circuits or digital circuits which include a large number of logic circuits.

In the aforementioned embodiments, the respective processers may include at least one operational core, such as a CPU (Central Processing Unit) or a GPU (Graphics Processing Unit). The processor may further include a field-programmable gate array (FPGA), a neural network processing unit (NPU), an IP core having other dedicated functions, and the like.

It is also possible to change, as required, the configuration of the storage medium for storing the respective programs relating to the supply chain management method according to the present disclosure, which is used as the storage portion according to the aforementioned embodiments. For example, the storage medium is not limited to the configuration provided on the circuit board, and may be provided in the form of a memory card or the like. The storage medium may be inserted into a slot portion, and electrically connected to the computer bus. The storage medium may be also constituted by an optical disk which forms a source of programs to be copied into a computer, a hard disk drive therefor, and the like.

The control unit and the method thereof which have been described in the present disclosure may be also implemented by a special purpose computer which includes a processor programmed to execute one or more functions implemented by computer programs. Alternatively, the control unit and the control method described in the present disclosure may be implemented by a special purpose hardware logic circuit. Alternatively, the control unit and the control method described in the present disclosure may be implemented by one or more special purpose computers configured by a combination of a processor executing a computer program and one or more hardware logic circuits. The computer program may be stored, as instructions to be executed by a computer, in a tangible non-transitory computer-readable medium.

## Claims

1. A supply chain management method for a computer (10a, 60a) to manage a trading record (ReT) between a plurality of traders (TR) that form a supply chain (SC), the supply chain management method comprising:
acquiring (S161), by at least one processor (11, 61), item data attached to a delivered item (IMi) delivered to a specific entity (TRs) that is one trader of the plurality of traders and a node identification data assigned to the specific entity;
calculating (S163), by the at least one processor (11, 61), a hash value based on the item data and the node identification data; and
providing, by the at least one processor (11, 61), at least the hash value to the specific entity as the item data that is to be attached to a shipped item (IMo) shipped from the specific entity to another trader of the plurality of traders (TR).

2. The supply chain management method according to claim 1, further comprising:
recording (S165), in at least a two-dimensional code (QRi) or an RFID tag that is to be attached to the shipped item, the item data containing at least the hash value.

3. The supply chain management method according to claim 1 or 2, wherein
acquiring the item data and the node identification data includes acquiring timestamp data associated with a date and time when the delivered item was at the specific entity, and
calculating the hash value includes calculating the hash value based on the timestamp data in addition to the item data and the node identification data.

4. The supply chain management method according to claim 3, further comprising:
determining (S35) whether there is a fraud in a trade between the plurality of traders based on a chronological order of the date and time indicated by each of a plurality of the time stamp data.

5. The supply chain management method according to any one of claims 1 to 4, wherein
the node identification data is a unique content assigned to each of the plurality of traders by a certifier (Cer), and
the supply chain management method further comprises:
determining (S32) whether the node identification data acquired from the specific entity is the node identification data assigned by the certifier.

6. The supply chain management method according to any one of claims 1 to 5, wherein
acquiring the item data and the node identification data includes acquiring location data where the item data was read, and
calculating the hash value includes calculating the hash value based on the location data in addition to the item data and the node identification data.

7. The supply chain management method according to any one of claims 1 to 6, further comprising:
determining (S34) whether the item data acquired from the specific entity is a duplicate of the item data acquired from another one of the plurality of traders.

8. The supply chain management method according to any one of claims 1 to 7, further comprising:
acquiring (S181) a reference request for the trading record together with the item data;
extracting (S182), based on the item data, the trading record related to the delivered item to which the item data is attached from accumulated trading records; and
providing (S185), to a requester (110) that made the reference request, providing data (PD) based on the extracted trading record.

9. A supply chain management method for a computer (10a, 60a) to manage a trading record (ReT) between a plurality of traders (TR) that form a supply chain (SC) using a blockchain (BC), the supply chain management method comprising:
acquiring (S161), by at least one processor (11, 61), item data attached to a delivered item (IMi) delivered to a specific entity (TRs) that is one trader of the plurality of traders and a node identification data assigned to the specific entity;
accumulating (S263), by the at least one processor (11, 61), the trading record related to the specific trader in association with the item data;
determining (S264, S216), by the at least one processor (11, 61), to continuously use the item data attached to the delivered item as the item data that is to be attached to a shipped item (IMo) shipped from the specific entity to another trader of the plurality of traders;
acquiring (S281) a reference request for the trading record together with the item data;
extracting (S283), from the trading records managed using the blockchain, the trading record related to any one of the plurality of traders which used the item data when the item data is continuously used by the plurality of traders; and
providing (S286), to a requester (110) that made the reference request, providing data (PD) based on the extracted trading record.

10. A trading record display program for displaying a trading record (ReT) between a plurality of traders (TR) that form a supply chain (SC), the trading record display program being configured to cause at least one processor (111) to:
read (S121) item data attached to a specific item (IMs);
transmit (S122), to a host node (60), a reference request for the trading record related to the specific item together with the item data;
receive (S123), from the host node, providing data (PD) related to the trading record that is related to the specific item; and
display (S125), based on the providing data, the trading record in a hierarchical manner reflecting a distribution channel of the specific item.

11. A supply chain management program for managing a trading record (ReT) between a plurality of traders (TR) that form a supply chain (SC), the supply chain management program being configured to cause at least one processor (61) to:
acquire (S161) item data attached to a delivered item (IMi) delivered to a specific entity (TRs) that is one trader of the plurality of traders and a node identification data assigned to the specific entity;
calculate (S163) a hash value based on the item data and the node identification data; and
provide at least the hash value to the specific entity as the item data that is to be attached to a shipped item (IMo) shipped from the specific entity to another trader of the plurality of traders.

12. A supply chain management system configured to manage a trading record (ReT) between a plurality of traders (TR) that form a supply chain (SC), the supply chain management system comprising:
a plurality of user nodes (10) each of which is used by corresponding one of the plurality of traders; and
at least one host node (60) configured to communicate with the plurality of user nodes, wherein
one user node of the plurality of user nodes used by a specific entity (TRs) that is one trader of the plurality of traders includes
an acquiring unit (21) configured to acquire item data attached to a delivered item delivered to the specific entity and node identification data assigned to the specific entity, and
a transmission unit (22) configured to transmit, to the host node, the item data and the node identification data acquired by the acquiring unit, and
the host node includes
a calculation unit (73) configured to calculate a hash value based on the item data and the node identification data transmitted from the one user node, and
a providing unit (74) configured to provide, to the specific entity, at least the hash value as the item data that is to be attached to a shipped item (IMo) shipped from the specific entity to another one of the plurality of traders.
